# EUROPÄISCHE PATENTSCHRIFT

(11) **EP 4 390 577 B1**
(45) Veröffentlichungstag und Bekanntmachung des Hinweises auf die Patenterteilung: **30.10.2024**
(21) Anmeldenummer: 22216057.4
(22) Anmeldetag: 22.12.2022
(51) Int. Cl.: G05B 9/02, G06F 9/50, G05B 19/406

(54) **ÜBERWACHUNG MINDESTENS EINER MASCHINE**
MONITORING AT LEAST ONE MACHINE
SURVEILLANCE D'AU MOINS UNE MACHINE

(43) Veröffentlichungstag der Anmeldung: 26.06.2024
(73) Patentinhaber: SICK AG, 79183 Waldkirch (DE)
(72) Erfinder: Neumann, Thomas, 79227 Schallstadt (DE); Steinkemper, Heiko, 79183 Waldkirch (DE); Liegibel, Pascal, 79359 Riegel (DE)

(56) Entgegenhaltungen:
- US-A1- 2021 247 743
- US-A1- 2022 244 995
- "IEC 61508-7 ED3: Functional safety of electrical/electronic/programmable electronic safety-related systems - Part 7: Overview of techniques and measures (see Functional Safety and IEC 61508)", 30 September 2022 (2022-09-30), pages 1 - 183, XP082038531, Retrieved from the Internet <URL:https://api.iec.ch/harmonized/documents/download/3086267> [retrieved on 20220930]
- ANONYMOUS: "Kubernetes log aggregation", 26 January 2020 (2020-01-26), pages 1 - 21, XP093048598, Retrieved from the Internet <URL:https://www.the-data-wrangler.com/kubernetes-log-aggregation/> [retrieved on 20230522]

## Beschreibung

Die Erfindung betrifft eine Sicherheitsvorrichtung und ein Verfahren zur Überwachung mindestens einer Maschine nach dem Oberbegriff von Anspruch 1 beziehungsweise 14.

Die Sicherheitstechnik befasst sich mit dem Personenschutz beziehungsweise der Vermeidung von Unfällen mit Maschinen. Eine gattungsgemäße Sicherheitsvorrichtung nutzt einen oder mehrere Sensoren, um eine Maschine beziehungsweise deren Umgebung zu überwachen und sie bei drohender Gefahr rechtzeitig in einen sicheren Zustand zu versetzen. Eine typische herkömmliche sicherheitstechnische Lösung überwacht mit dem mindestens einen Sensor, etwa mittels eines Laserscanners, ein Schutzfeld, das während des Betriebs der Maschine vom Bedienpersonal nicht betreten werden darf. Erkennt der Sensor einen unzulässigen Schutzfeldeingriff, etwa ein Bein einer Bedienperson, so löst er einen Nothalt der Maschine aus. Es gibt alternative Schutzkonzepte, wie das sogenannte Speed-and-Separation-Monitoring, bei dem die Abstände und Geschwindigkeiten der erfassten Objekte in der Umgebung bewertet und im Gefahrenfalle reagiert wird.

In der Sicherheitstechnik ist eine besondere Verlässlichkeit gefordert, und deshalb sind hohe Sicherheitsanforderungen zu erfüllen, beispielsweise die Norm EN13849 für Maschinensicherheit und die Gerätenorm EN61496 für berührungslos wirkende Schutzeinrichtungen (BWS). Einige typische Maßnahmen dafür sind eine sichere elektronische Auswertung durch redundante, diversitäre Elektronik oder verschiedene Funktionsüberwachungen, etwa die Überwachung der Verschmutzung optischer Bauteile einschließlich einer Frontscheibe. Etwas allgemeiner sind wohldefinierte Fehlerbeherrschungsmaßnahmen nachzuweisen, damit mögliche sicherheitskritische Fehler entlang der Signalkette von dem Sensor über die Auswertung bis zur Einleitung der sicherheitstechnischen Reaktion vermieden oder kontrolliert werden.

Aufgrund der hohen Anforderungen an Hardware und Software in der Sicherheitstechnik werden bislang in erster Linie monolithische Architekturen eingesetzt, mit spezifisch entwickelter Hardware, die Redundanzen und Funktionsüberwachung durch Mehrkanaligkeit und Testmöglichkeiten vorsieht. Entsprechend werden Nachweise korrekter Algorithmen etwa nach IEC TS 62998, IEC-61508-3 geführt, und der Entwicklungsprozess der Software unterliegt permanenten strengen Tests und Überprüfungen. Ein Beispiel hierfür ist ein Sicherheitslaserscanner wie beispielsweise erstmals aus DE 43 40 756 A1 bekannt und in seinen Grundzügen bis heute weit verbreitet eingesetzt. Dort ist die gesamte Auswertungsfunktionalität integriert, einschließlich der Lichtlaufzeitmessung zur Abstandsbestimmung und der Objekterfassung in konfigurierten Schutzfeldern. Das Ergebnis ist ein fertig ausgewertetes binäres Absicherungssignal an einem zweikanaligen Ausgang (OSSD, Output Signal Switching Device) des Laserscanners, das im Falle eines Schutzfeldeingriffs die Maschine stoppt. Auch wenn sich dieses Konzept bewährt hat, bleibt es unflexibel, da Änderungen praktisch nur durch Neuentwicklung eines Nachfolgemodells des Laserscanners möglich sind.

In einigen herkömmlichen Sicherheitsanwendungen wird zumindest ein Teil der Auswertung aus dem Sensor in eine programmierbare Steuerung ausgelagert (SPS, Speicherprogrammierbare Steuerung). Dafür sind aber besondere Sicherheitssteuerungen erforderlich, die selbst zur Fehlervermeidung und -aufdeckung mehrkanalige Strukturen und dergleichen aufweisen. Sie sind daher kostenaufwändig und bieten vergleichsweise wenig Speicher- und Rechenkapazitäten, die beispielsweise mit einer 3D-Bildverarbeitung völlig überfordert sind.

Die Verwendung von Standardsteuerungen wäre zwar unter Einbettung in die notwendigen Funktionsüberwachungen grundsätzlich denkbar, jedoch wird dies heutzutage im industriellen Umfeld kaum angewandt, da es aufwändigere Architekturen und Expertenwissen verlangt. Im Übrigen sind auch Standardsteuerungen oder SPS nur mit bestimmten Sprachen bei zum Teil sehr limitierendem Sprachraum programmierbar. Schon verhältnismäßig einfache Funktionsblöcke bedürfen erheblicher Entwicklungsaufwände und Laufzeitressourcen, so dass deren Implementierung in einer Standardsteuerung, erst recht unter Sicherheitsmaßnahmen wie Redundanzen, bei etwas komplexeren Anwendungen kaum realisierbar sind.

Die EP 3 709 106 A1 kombiniert in einem Sicherheitssystem eine Sicherheitssteuerung mit einer Standardsteuerung. Aufwändigere Berechnungen bleiben der Standardsteuerung überlassen, und deren Ergebnisse werden durch die Sicherheitssteuerung validiert. Die Sicherheitssteuerung greift aber dafür auf vorhandene sichere Daten eines sicheren Sensors zurück, was die möglichen Anwendungsszenarien einschränkt und zudem wiederum Expertenwissen fordert, um geeignete sichere Daten zu gewinnen und damit geeignet zu validieren. Zudem ist die Hardwarestruktur weiterhin fest vorgegeben und die Anwendung speziell darauf fest implementiert.

In vielen Fällen wäre es erwünscht, die Sicherheitsüberwachung mit einer Automatisierungsaufgabe zu kombinieren. So werden nicht nur Unfälle vermieden, sondern die eigentliche Aufgabe der Maschine wird ebenfalls automatisiert unterstützt. Bisher sind dafür aber meist völlig unterschiedliche Systeme und Sensoren im Einsatz. Das liegt unter anderem daran, dass ein Sicherheitssensor für eine Automatisierungsaufgabe viel zu teuer ist und umgekehrt die Komplexität eines Sicherheitssensors nicht durch weitere Funktionen überladen werden soll. Die EP 2 053 538 B1 erlaubt für eine 3D-Kamera die Definition von separaten Sicherheits- und Automatisierungsbereichen. Das ist aber nur ein erster Schritt, da zwar immerhin derselbe Sensor für die beiden Welten Sicherheit und Automatisierung verwendet wird, diese beiden Aufgaben dann aber doch räumlich und implementierungsseitig wieder eindeutig voneinander trennt. Die IEC 62998 ermöglicht die Koexistenz von Sicherheits- und Automatisierungsdaten, macht aber als Norm keinerlei konkrete Implementierungsvorschläge.

Außerhalb der Sicherheitstechnik gibt es längst sehr viel flexiblere Architekturen. Der monolithische Ansatz ist dort seit langem in mehreren Schritten moderneren Konzepten gewichen. Die frühere traditionelle Verteilung (Deployment) mit fester Hardware, auf der ein Betriebssystem die einzelnen Anwendungen koordiniert, hat zwar weiterhin ihre Berechtigung in Standalone-Geräten, genügt aber in einer vernetzten Welt längst nicht mehr. Der Grundgedanke in der Weiterentwicklung war das Einziehen von zusätzlichen Schichten, die von der konkreten Hardware immer weiter abstrahieren.

Ein erster Schritt sind die sogenannten virtuellen Maschinen, wo die zusätzliche Schicht als Hypervisor oder Virtual Machine Monitor bezeichnet ist. Solche Ansätze werden inzwischen auch zaghaft in der Sicherheitstechnik verfolgt. So bietet etwa die EP 3 179 278 B1 in einem Sicherheitssensor eine geschützte Umgebung an, um dem Anwender zu erlauben, eigene Programmbausteine auf dem Sicherheitssensor ablaufen zu lassen.

Solche Programmbausteine sind dann aber sorgfältig von der Sicherheitsfunktionalität getrennt und tragen dazu nichts bei.

Eine weitergehende Abstraktion basiert auf sogenannten Containern (Containervirtualisierung, Containering). Ein Container ist quasi eine kleine virtuelle Kapsel für eine Softwareanwendung, die eine vollständige Umgebung für deren Ablauf einschließlich Speicherbereichen, Bibliotheken und dergleichen bietet. Die zugehörige abstrahierende Schicht oder Laufzeitumgebung wird container runtime genannt. Damit kann die Softwareanwendung unabhängig von der praktisch beliebigen Hardware entwickelt werden, auf der sie später abläuft. Container werden häufig mit Hilfe von Docker umgesetzt.

In einer modernen loT-Architektur (Internet of Things, Industrial Internet of Things) wird eine Vielzahl von Containern mit unterschiedlichsten Softwareanwendungen zusammengeführt. Diese Container müssen geeignet koordiniert werden, was in diesem Zusammenhang als Orchestrieren bezeichnet wird und wofür ein sogenannter orchestration layer als weitere Abstraktion hinzukommt. Für die Container-Orchestrierung setzt sich zunehmend Kubernetes durch, daneben sind Alternativen wie Docker Swarm als Erweiterung von Docker sowie rkt oder LXC bekannt.

Der Einsatz solcher modernen, abstrahierenden Architekturen in der Sicherheitstechnik scheitert bislang an den hohen Hürden der Sicherheitsnormen und der entsprechend konservativen Herangehensweise im Anwendungsfeld der funktionalen Sicherheit. Allgemein im industriellen Umfeld werden Containertechnologien durchaus verfolgt, und beispielsweise in der Automobilindustrie gibt es Pläne für den Einsatz von Kubernetes-Architekturen, und auch die Luftwaffe verfolgt derlei Ansätze. Dies alles zielt aber nicht auf die funktionale Sicherheit und löst somit die genannten Probleme nicht.

Zwar ist eine hohe Verfügbarkeit auch in einer üblichen loT-Weit erwünscht, aber diese Form der Ausfallsicherheit ist längst noch nicht mit dem vergleichbar, was die Sicherheitsnormen fordern. Für den Sicherheitstechniker sind daher Edge- oder Cloudanwendungen für eine normgerechte Sicherheit bisher undenkbar. Es widerspricht dem verbreiteten Denken, für reproduzierbare Bedingungen zu sorgen und sich gegen alle unter diesen Bedingungen vorstellbaren Möglichkeiten einer Fehlfunktion zu wappnen. Eine weitgehende Abstraktion oder Virtualisierung schafft eine zusätzliche Ungewissheit, die bislang mit den Sicherheitsanforderungen unvereinbar erscheint.

Die EP 4 040 034 A1 stellt eine Sicherheitsvorrichtung und ein Sicherheitsverfahren zur Überwachung einer Maschine vor, bei dem mit den genannten Container- und Orchestrierungstechnologien die Sicherheitsfunktionalität von der unterliegenden Hardware abstrahiert werden kann. Es werden Logikeinheiten nach Bedarf erzeugt, aufgelöst oder anderer Hardware zugewiesen. Das ermöglicht variable Grade der Redundanz und eine flexible gegenseitige Überwachung von Logikeinheiten. Für das Testen und Überwachen werden spezielle, als Diagnoseeinheiten ausgebildete Logikeinheiten vorgeschlagen. Die EP 4 040 034 A1 erklärt aber nicht, wie es mit Hilfe des Konzepts einer Diagnoseeinheit konkret gelingt, in dem Gesamtsystem auftretende sicherheitsrelevante Fehler tatsächlich aufzudecken.

Die US 2021/0247743 A1 befasst sich mit funktionaler Sicherheit in autonomen Fahrzeugen, Robotern und industriellen Steuerungssystemen.

Es ist daher Aufgabe der Erfindung, das soeben geschilderte flexible Sicherheitskonzept für die praktische Umsetzung weiter zu verbessern.

Diese Aufgabe wird durch eine Sicherheitsvorrichtung und ein Verfahren zur Überwachung mindestens einer Maschine nach Anspruch 1 beziehungsweise 14 gelöst. Die überwachte oder abzusichernde Maschine ist zunächst allgemein zu verstehen, es handelt sich beispielsweise um eine Bearbeitungsmaschine, eine Fertigungsstraße, eine Sortieranlage, eine Prozessanlage, einen Roboter oder ein Fahrzeug in zahlreichen Spielarten, wie schienengebunden oder nicht, geführt oder fahrerlos und dergleichen. Mindestens ein Sensor liefert Sensordaten zu der Maschine, d.h. Daten über die Maschine selbst, über das, mit dem sie interagiert, oder über deren Umgebung. Die Sensordaten sind zumindest teilweise sicherheitsrelevant, zusätzliche nicht sicherheitsrelevante Sensordaten für Automatisierungs- oder Komfortfunktionen sind denkbar. Die Sensoren können, müssen aber keine sicheren Sensoren sein, die Sicherheit kann erst nachgelagert gewährleistet werden.

Eine Verarbeitungseinheit fungiert als Ausführungsumgebung. Die Verarbeitungseinheit ist somit das strukturelle Element, die Ausführungsumgebung dessen Funktion. Die Verarbeitungseinheit ist mindestens mittelbar mit dem Sensor und der Maschine verbunden. Sie hat demnach Zugriff auf die Sensordaten für deren Verarbeitung, möglicherweise indirekt über zwischengeschaltete weitere Einheiten, und kann mit der Maschine kommunizieren und insbesondere auf sie einwirken, vorzugsweise über eine Maschinensteuerung der Maschine. Die Verarbeitungseinheit oder Ausführungsumgebung bezeichnet als Sammelbegriff die Hardware und Software, mit der anhand der Sensordaten über das Erfordernis und vorzugsweise auch Art einer sicherheitsgerichteten Reaktion der Maschine entschieden wird.

Die Verarbeitungseinheit umfasst mindestens einen Rechenknoten. Das ist eine digitale Rechenvorrichtung beziehungsweise ein Hardwareknoten oder ein Teil davon, der Rechen- und Speicherkapazitäten zum Ausführen eines Softwarefunktionsblocks zur Verfügung stellt. Allerdings muss nicht jeder Rechenknoten zwangsläufig ein separater Hardwarebaustein sein, es können beispielsweise durch Verwendung von Multiprozessoren mehrere Rechenknoten auf demselben Gerät realisiert sein, und umgekehrt kann ein Rechenknoten unterschiedliche Hardwareressourcen bündeln.

Auf dem Rechenknoten oder einem der Rechenknoten laufen im Betrieb der Sicherheitsvorrichtung mehrere Logikeinheiten ab. Eine Logikeinheit bezeichnet demnach allgemein einen Softwarefunktionsblock. Erfindungsgemäß ist mindestens eine Logikeinheit als Sicherheitsfunktionseinheit ausgebildet, die eine sicherheitsgerichtete Auswertung der Sensordaten leistet. Ziel der sicherheitsgerichteten Auswertung ist der Personenschutz beziehungsweise eine Unfallvermeidung, indem anhand der Sensordaten festgestellt wird, ob eine Gefahr droht beziehungsweise ein sicherheitsrelevantes Ereignis erkannt wurde. Das ist beispielsweise bei Erfassung einer Person zu nahe an der Maschine oder in einem Schutzfeld der Fall. An der sicherheitsgerichteten Auswertung können eine oder mehrere Logikeinheiten beteiligt sein. Im Falle eines sicherheitsrelevanten Ereignisses wird vorzugsweise ein Sicherheitssignal an die Maschine ausgegeben, um dort eine sicherheitsgerichtete Reaktion auszulösen, mit der die Maschine in einen sicheren Zustand versetzt wird, der die Gefahr beseitigt oder wenigstens auf ein hinnehmbares Niveau absenkt. Weiterhin ist mindestens eine Logikeinheit als Diagnoseeinheit ausgebildet. Damit wird die Funktion anderer Logikeinheiten und insbesondere der mindestens einen Sicherheitsfunktionseinheit auf Fehler hin überwacht.

Die Erfindung geht von dem Grundgedanken aus, mittels der Diagnoseeinheit eine Zustands- und Ausführungsüberwachung der Logikeinheiten durchzuführen. Dafür übermittelt die mindestens eine Sicherheitsfunktionseinheit Zustandsnachrichten und Ausführungsnachrichten an die Diagnoseeinheit, die dort ausgewertet werden. Der Zustand oder Status der mindestens einen Sicherheitsfunktionseinheit gibt Auskunft über deren Einsatzbereitschaft und mögliche Einschränkungen oder Fehler in der mindestens einen Sicherheitsfunktionseinheit. Ausführungsnachrichten betreffen die Ausführung der Sicherheitsfunktion oder des Dienstes, den die mindestens eine Sicherheitsfunktionseinheit ausführt, und daraus lässt sich ein Ausführungsablauf der ausgeführten Sicherheitsfunktionen beziehungsweise Dienste erzeugen. Gemeinsam ermöglicht dies eine Systemdiagnose, mit der eine sicherheitsrelevante Fehlfunktion der Sicherheitsvorrichtung erkannt werden kann. Dabei benötigt die Diagnoseeinheit weder spezielles Wissen, wie oder mit welchem Algorithmus eine Sicherheitsfunktionseinheit arbeitet, noch welche Auswertungsergebnisse sie liefert, obwohl beides ergänzend möglich wäre. Im Fehlerfall kann die sichere Funktion der Sicherheitsvorrichtung nicht garantiert werden, vorzugsweise mit ähnlichen Konsequenzen einer sicherheitsgerichteten Reaktion der Maschine wie im Falle einer durch ein Sicherheitsfunktionsmodul erkannten Gefahr. Für die Systemdiagnose genügt ein einziges als Diagnoseeinheit ausgebildetes Logikmodul, aber es wäre auch denkbar, die Zustands- und Ausführungsüberwachung in je einer eigenen Diagnoseeinheit zu implementieren oder die Funktionalität anders auf mehrere Logikmodule zu verteilen.

Die Erfindung hat den Vorteil, dass eine hochflexible Sicherheitsarchitektur ermöglicht wird, in der unter anderem in einem industriellen Umfeld (Industrial Internet of Things, IIoT) sicherheitsrelevante Anwendungen koordiniert oder orchestriert werden können. Dabei können Sicherheit und Automatisierung eng verzahnt werden. Es genügt Standardhardware, es ist keine aufwändige dedizierte sichere Hardware erforderlich. Die Erfindung ist weitgehend unabhängig von der konkreten Hardwarelandschaft, solange insgesamt genügend Speicher- und Rechenressourcen zur Verfügung stehen. Außerdem ist die Robustheit erheblich erhöht, weil Logikeinheiten auf diversitärer Hardware implementiert und zwischen Rechenknoten verschoben werden können. Als ein wichtiger denkbarer Anwendungsfall kann die Hardwarelandschaft oder Teil der Hardwarelandschaft eine Cloud sein, die Erfindung verbindet also die zuvor einander fremden Welten der Cloud und der Sicherheitstechnik. Im Rahmen von Cloud-Native-Konzepten gibt es bestehende Open-Source-Frameworks und -Werkzeuge, die auch groß angelegte Anwendungen unterstützen, jedoch bislang keine funktionale Sicherheit bieten.

Der erfindungsgemäße Ansatz ist radikal anders als herkömmlich in der Sicherheitstechnik. Bisher wird eine feste Hardwarestruktur vorgegeben, meist eigens für genau diese Sicherheitsfunktion entwickelt, und die Softwarefunktionalität ist für genau diese Hardwarestruktur entwickelt, dort fest implementiert und getestet. Eine nachträgliche Veränderung der Softwareverteilung (deployment) ist ausgeschlossen, und das gilt erst recht durch eine Veränderung der zugrundeliegenden Hardware. Derartige Modifikationen erfordern herkömmlich zumindest einen aufwändigen Umbau durch einen Sicherheitsexperten, in der Regel eine komplette Neuentwicklung. Ein Ausfluss der typischen konservativen Herangehensweise in der Industrie und erst recht in der Sicherheitstechnik ist, dass selbst Firmware- oder Softwareupdates von Sensoren und Steuerungen äußerstenfalls in langen Zyklen und typischerweise gar nicht vorgenommen werden.

In dieser Beschreibung werden immer wieder die Begriffe Sicherheit oder sicher verwendet. Das ist vorzugsweise jeweils im Sinne einer Sicherheitsnorm zu verstehen. Es wird demnach eine Sicherheitsnorm beispielsweise für Maschinensicherheit, berührungslos wirkende Schutzeinrichtungen oder Unfallvermeidung im Personenschutz erfüllt, oder es werden nochmals etwas anders formuliert durch Normen definierte Sicherheitsniveaus eingehalten, folglich jeweils Fehler bis zu einem in der Sicherheitsnorm oder analog dazu spezifizierten Sicherheitsniveau beherrscht. Einleitend sind einige Beispiele solcher Sicherheitsnormen genannt, wo die Sicherheitsniveaus beispielsweise als Schutzklassen oder Performance Level bezeichnet sind. Die Erfindung ist nicht auf eine bestimmte dieser Sicherheitsnormen festgelegt, die sich in ihrer konkreten Nummerierung und Formulierung regional und im Laufe der Zeit ändern können, nicht aber in ihren grundlegenden Prinzipien zur Schaffung von Sicherheit. Später wird in einigen Ausführungsformen der Sicherheitsbegriff etwas erweitert auf eine kontextbezogene oder situative Sicherheit.

Die Implementierung der Ausführungsumgebung erfolgt vorzugsweise in Kubernetes. Dort wird die Ausführungsumgebung als "Control plane" bezeichnet. Ein Master koordiniert die allgemeinen Abläufe beziehungsweise die Orchestrierung (orchestration layer). Rechenknoten heißen in Kubernetes Nodes, und sie weisen mindestens einen Unterknoten oder Pod auf, in dem die Logikeinheiten in jeweiligen Containern ablaufen. Kubernetes kennt bereits Mechanismen, mit denen geprüft wird, ob eine Logikeinheit noch arbeitet. Diese Überprüfung genügt jedoch keinerlei sicherheitsspezifischen Anforderungen und beschränkt sich im Wesentlichen darauf, hin und wieder ein Lebenszeichen zu erhalten und womöglich einen Container neu zu starten. Dabei gibt es keinerlei Garantien, wann der Fehler auffällt und wieder behoben ist.

Die Ausführungsumgebung ist vorzugsweise dafür ausgebildet, Logikeinheiten zu erzeugen, aufzulösen und einem Rechenknoten zuzuweisen beziehungsweise sie zwischen Rechenknoten zu verschieben. Das geschieht vorzugsweise nicht nur einmalig, sondern auch dynamisch während des Betriebs, und es betrifft ganz ausdrücklich auch die sicherheitsrelevanten Logikeinheiten, also die mindestens eine Sicherheitsfunktionseinheit und/oder die Diagnoseeinheit. Die Verknüpfung zwischen Hardware und Auswertung wird damit unter Wahrung der funktionalen Sicherheit fließend. Herkömmlich hingegen werden sämtliche Sicherheitsfunktionen fest und unveränderlich auf dedizierter Hardware implementiert. Eine Veränderung, soweit überhaupt ohne Umbau oder Neuentwicklung darstellbar, würde als völlig unverträglich mit dem zugrundeliegenden Sicherheitskonzept angesehen. Das gilt schon für eine einmalige Implementierung und erst recht dynamische Änderungen zur Laufzeit. Im Gegenteil wurde bisher stets alles daran gesetzt, mit durchaus großem Aufwand und zahlreichen komplexen Einzelmaßnahmen, dass die Sicherheitsfunktion anfangs wie über die gesamte Betriebszeit eine wohldefinierte und unveränderte Umgebung vorfindet.

Die Ausführungsumgebung ist bevorzugt dafür ausgebildet, die einer Logikeinheit zugewiesenen Ressourcen zu verändern. Dies kann die Logikeinheit bei einer schnelleren Verarbeitung unterstützen, aber auch Ressourcen für andere Logikeinheiten freistellen. Besondere Möglichkeiten, um mehr Ressourcen bereitzustellen, sind die Verschiebung einer Logikeinheit auf einen anderen Rechenknoten oder die Erzeugung einer weiteren Instanz oder Kopie der Logikeinheit, wobei eine Logikeinheit für letzteres bevorzugt für eine parallelisierbare Ausführung ausgebildet ist.

Die Ausführungsumgebung hält bevorzugt eine Konfigurationsinformation oder Konfigurationsdatei über die Logikeinheiten gespeichert. Anhand der Konfigurationsinformation wird Buch über die vorhandenen Logikeinheiten geführt beziehungsweise vorgegeben, welche Logikeinheiten in welchem Zeitablauf und mit welchen Ressourcen ausgeführt werden sollen und wie sie möglicherweise miteinander in Beziehung stehen.

Die Konfigurationsinformation ist besonders bevorzugt mittels Signaturen oder Blockchain-Datensätzen gegen Manipulation gesichert. Eine solche Manipulation kann absichtlich oder unabsichtlich sein, jedenfalls sollte sich in einer Sicherheitsanwendung die Konfiguration der Logikdateien keinesfalls unbemerkt verändern.

Die Ausführungsumgebung weist bevorzugt mindestens eine Mastereinheit auf, die mit den Rechenknoten kommuniziert und sie koordiniert. Die Mastereinheit kann für Redundanz und/oder verteilte Zuständigkeit auch mehrere Untereinheiten aufweisen oder von Knotenmanagereinheiten der Rechenknoten unterstützt werden und auf einem eigenen Rechenknoten oder einem Rechenknoten gemeinsam mit Logikeinheiten implementiert sein.

Der mindestens eine Rechenknoten weist bevorzugt eine Knotenmanagereinheit zur Kommunikation mit anderen Rechenknoten und der Ausführungsumgebung auf. Diese Knotenmanagereinheit ist für die Verwaltung und Koordinaten des zugehörigen Rechenknotens, insbesondere die Logikeinheiten dieses Rechenknotens sowie für das Zusammenspiel mit den anderen Rechenknoten und der Mastereinheit verantwortlich. Sie kann in praktisch beliebiger Verteilung auch Aufgaben der Mastereinheit übernehmen.

Der mindestens eine Rechenknoten weist bevorzugt mindestens einen Unterknoten auf, und die Logikeinheiten sind einem Unterknoten zugeordnet. Damit werden die Rechenknoten ein weiteres Mal in sich strukturiert, um Logikeinheiten in einem Unterknoten zusammenzufassen. Dieses Konzept verfolgt auch Kubernetes in Form der Pods.

Die mindestens eine Logikeinheit ist bevorzugt als Container implementiert. Damit sind die Logikeinheiten abgekapselt oder containerisiert und werden auf nahezu beliebiger Hardware lauffähig. Der sonst übliche enge Zusammenhang zwischen Sicherheitsfunktion und deren Implementierung auf fester Hardware ist aufgebrochen, womit sich die Flexibilität und Prozessstabilität ganz erheblich erhöht. Die Ausführungsumgebung koordiniert oder orchestriert die Container mit den darin befindlichen Logikeinheiten untereinander. Es gibt mindestens zwei Abstraktionsschichten, einmal eine jeweilige Containerschicht (container runtime) und zum zweiten eine darüber liegende Orchestrierungsschicht (orchestration layer) der Ausführungsumgebung.

Die Ausführungsumgebung ist bevorzugt auf mindestens einem Sensor, einer speicherprogrammierbaren Steuerung, einer Maschinensteuerung, einer Rechnervorrichtung in einem lokalen Netzwerk, einem Edge-Device und/oder in einer Cloud implementiert. Die zugrundeliegende Hardwarelandschaft ist mit anderen Worten praktisch beliebig, was ein ganz großer Vorteil des erfindungsgemäßen Ansatzes ist. Die Ausführungsumgebung arbeitet abstrakt mit Rechenknoten, die darunterliegende Hardware kann sich sehr heterogen zusammensetzen. Insbesondere werden der Sicherheitstechnik auch Edge- oder Cloud-Architekturen zugänglich, ohne dabei auf die vertraute Auswertungshardware von (sicheren) Sensoren oder Steuerungen verzichten zu müssen.

Die Ausführungsumgebung ist bevorzugt dafür ausgebildet, Rechenknoten einzubinden und/oder auszuschließen. Die Hardwareumgebung darf sich damit ändern, die Ausführungsumgebung ist in der Lage, damit umzugehen und neue oder angepasste Rechenknoten zu bilden. Es ist demnach möglich, neue Hardware anzuschließen oder Hardware auszutauschen, insbesondere zum Ersatz bei (Teil-)ausfall sowie zum Aufrüsten und zur Bereitstellung zusätzlicher Rechen- und Speicherressourcen. Die Logikeinheiten können auf den von der Ausführungsumgebung abstrahierten Rechenknoten trotz einer möglicherweise auch rabiat veränderten Hardwarekonfiguration weiterarbeiten.

Mindestens eine Logikeinheit ist bevorzugt als Automatisierungseinheit ausgebildet, die aus den Sensordaten eine für eine Automatisierungsaufgabe relevante Information und/oder einen Steuerungsbefehl für die Maschine erzeugt, wobei Information und Steuerungsbefehl nicht sicherheitsrelevant sind. Die Ausführungsumgebung unterstützt somit eine weitere Art von Logikeinheit, die anhand der Sensordaten nicht sicherheitsrelevante Zusatzfunktionen bietet. Es geht bei solchen Automatisierungsaufgaben nicht um den Personenschutz oder die Unfallvermeidung, und demgemäß müssen insoweit keine Sicherheitsnormen erfüllt werden. Typische Automatisierungsaufgaben sind Qualitäts- und Ablaufkontrollen, Objekterkennung zum Greifen, Sortieren oder für sonstige Bearbeitungsschritte, Klassifikationen und dergleichen. Auch eine Automatisierungseinheit profitiert davon, wenn die Ausführungsumgebung ihr flexible Ressourcen zuweist und sie daraufhin überwacht, ob sie ihre Aufgabe noch ausführt, und beispielsweise gegebenenfalls die entsprechende Logikeinheit neu startet, auf einen anderen Rechenknoten schiebt oder eine Kopie der Logikeinheit ins Leben ruft. Dabei geht es dann aber um Verfügbarkeit mit Vermeidung von Stillständen und der Unterstützung ordnungsgemäßer Abläufe, die für den Betreiber der Maschine durchaus sehr relevant sind, aber nichts mit Sicherheit zu tun haben. Es ist denkbar, eine Automatisierungseinheit in die Zustands- und Ausführungsüberwachung der Diagnoseeinheit einzubinden, da verlässliche Automatisierungsfunktionen ebenfalls einen Mehrwert bieten können, auch wenn damit ein Sicherheitsniveau eingehalten wird, das an dieser Stelle womöglich zu hoch ist.

Die Diagnoseeinheit ist bevorzugt dafür ausgebildet, situationsbezogen festzustellen, ob eine Fehlfunktion sicherheitsrelevant ist. Die Zustände der vorhandenen Sicherheitsfunktionseinheiten beziehungsweise der Ausführungsablauf können abhängig von den gegenwärtigen Umständen unterschiedlich bewertet werden. Beispielsweise stellt ein Eingriff eines Körperteils in einen Arbeitsbereich eines Roboters ausnahmsweise keine Gefahr dar, wenn zugleich garantiert ist, dass der Roboter momentan sicher in einem begrenzten Koordinatenbereich bleibt, der die Eingriffsstelle nicht umfasst. Unter solchen situationsbezogenen Randbedingungen ist sogar denkbar, dass Sicherheitsfunktionseinheiten und Automatisierungseinheiten dynamisch ihre Rollen wechseln.

Die Sicherheitsvorrichtung weist bevorzugt eine Abschalteinheit auf, die dafür ausgebildet ist, auf Anweisung der Diagnoseeinheit im Falle einer sicherheitsrelevanten Fehlfunktion oder auf Anweisung einer Sicherheitsfunktionseinheit bei Erkennung einer Gefahrensituation anhand der ausgewerteten Sensordaten die Maschine in einen sicheren Zustand zu versetzen. Die Abschalteinheit beziehungsweise der Abschaltdienst kümmert sich somit darum, dass die Maschine tatsächlich abgesichert wird, wenn die Diagnoseeinheit oder eine Sicherheitsfunktionseinheit das anfordert, vorzugsweise durch ein entsprechendes Signal an die Maschine oder deren Maschinensteuerung. Je nach Situation wird der sichere Zustand beispielsweise durch ein Verlangsamen, einen besonderen Arbeitsmodus der Maschine beispielsweise mit begrenzter Bewegungsfreiheit oder Bewegungsvielfalt, ein Ausweichen oder ein Anhalten erreicht. Die Abschalteinheit kann als Logikeinheit implementiert und in eine Diagnose einbezogen sein. Bevorzugt erhält die Abschalteinheit regelmäßig ein Signal von der Diagnoseeinheit, dass alles in Ordnung ist, und reagiert auf ein Ausbleiben dieses Signals ebenso mit einer Absicherungsmaßnahme wie im Falle einer expliziten Absicherungsanforderung.

Die Ausführungsumgebung weist ein Nachrichtensystem auf, über das die mindestens eine Sicherheitsfunktionseinheit Zustandsnachrichten und Ausführungsnachrichten an die Diagnoseeinheit übermitteln. Das Nachrichtensystem ist mit zwei Nachrichtenkanälen ausgebildet, um Zustandsnachrichten und Ausführungsnachrichten nebeneinander zu übermitteln. Es gibt damit zwei Nachrichtenflüsse, um die Zustandsüberwachung und Ausführungsüberwachung voneinander separiert halten zu können.

Die mindestens eine Sicherheitsfunktionseinheit ist bevorzugt dafür ausgebildet, regelmäßig eine Zustandsnachricht zu übermitteln und/oder ereignisbasiert für eine jeweilige Ausführung ihrer Sicherheitsfunktion eine Ausführungsnachricht zu übermitteln. Der Zustand der Sicherheitsfunktionseinheit wird damit kontinuierlich überwacht, mit einer Feinkörnigkeit, die letztlich durch das gewünschte Sicherheitsniveau vorgegeben ist. Regelmäßig kann zyklisch bedeuten, ist aber etwas weicher. Es genügt, wenn jeweils spätestens nach einer vorgegebenen Zeitspanne der Zustand wieder bekannt wird, die Zeitintervalle zwischen zwei Zustandsnachrichten können aber in diesem Rahmen schwanken. Eine Ausführungsnachricht liefert jeweils dann neue Information, wenn zwischenzeitlich eine Ausführung erfolgte, so dass der Austausch von Ausführungsnachrichten ereignisbasiert implementiert sein kann. Da die Sicherheitsfunktion auf Sensordaten basiert und die Sensoren selbst häufig ihre Daten zyklisch bereitstellen, können die Auswertungsereignisse zyklisch auftreten, so dass die ereignisbasierte Abfolge letztlich auf diesem indirekten Weg doch zyklisch wird.

Die Zustandsnachricht und/oder die Ausführungsnachricht weist vorzugsweise eine Senderinformation über die sendende Sicherheitsfunktionseinheit, einen Zeitstempel, eine Sequenz und/oder eine Checksumme auf. Damit können die Zustände und Ausführungen der richtigen Logikeinheit zugeordnet und zeitlich eingeordnet werden. Die Sequenz bringt die Nachrichten beziehungsweise deren Inhalte in eine Ordnung. Mit einer Checksumme oder einer vergleichbaren Maßnahme kann sichergestellt werden, dass der Inhalt der Nachricht korrekt übermittelt wurde.

Die mindestens eine Sicherheitsfunktionseinheit ist bevorzugt für eine Selbstdiagnose ausgebildet, in der sie ihre eigenen Daten, Programme, Verarbeitungsergebnisse und/oder die Übereinstimmung mit einer Systemzeit überprüft. Daraus kann die Sicherheitsfunktionseinheit insbesondere ihren eigenen Zustand ermitteln und in einer Zustandsnachricht mitteilen. Eine Abweichung von der Systemzeit würde zu Unstimmigkeiten mit den Zeitstempeln in den Nachrichten führen und damit möglicherweise einer fehlerhaften Systemdiagnose führen. Die Selbstdiagnose genügt allein nicht, um insgesamt Sicherheit zu gewährleisten, da die Logikeinheit selbst nicht sicher ausgebildet ist, aber eine Selbstdiagnose stellt einen möglichen Baustein der Sicherheit dar.

Die Diagnoseeinheit für die Zustandsüberwachung ist bevorzugt dafür ausgebildet, eine vorgegebene Zustandserwartung für die Zustände der mindestens einen Sicherheitsfunktionseinheit abzurufen, insbesondere die Zustandserwartung anhand bisheriger Zustände, Arbeitsabläufe und/oder Arbeitsergebnisse der Logikeinheiten zu modifizieren, und die Zustandserwartung mit einem aus den Zuständen der Zustandsnachrichten abgeleiteten gegenwärtigen Gesamtzustand zu vergleichen. Die Diagnoseeinheit hat somit die Zustandserwartung für ein fehlerfreies System, wobei diese Zustandserwartung konfiguriert, anderweitig vorgegeben, fest programmiert beziehungsweise in einem Speicher bereitgestellt sein kann. Eine Zustandserwartung kann darin bestehen, überhaupt regelmäßig von allen vorhandenen Sicherheitsfunktionseinheiten eine Zustandsnachricht zu erhalten, oder dass nur bestimmte Zustände gemeldet werden, die nicht auf einen Fehler hindeuten. Die Zustandserwartung kann situationsbezogen angepasst sein. Aus den empfangenen Zustandsnachrichten werden aktuelle Zustandsinformationen ermittelt und insbesondere zu einem Gesamtzustand kombiniert, um dies mit der Zustandserwartung zu vergleichen. Eine Abweichung ist ein Hinweis auf eine sicherheitsrelevante Fehlfunktion. Dabei kann es noch Toleranzen hinsichtlich bestimmter Sicherheitsfunktionen und zeitliche Toleranzen geben. Eine durch Toleranzen, die aktuelle Situation oder eine andere vorhergesehene Ausnahme nicht erklärbare Abweichung wird vorzugsweise als sicherheitsrelevante Fehlfunktion gewertet, woraufhin die Maschine in den sicheren Zustand überführt wird.

Die Zustandsnachricht gibt vorzugsweise Auskunft darüber, ob die Zustandsnachricht übermittelnde Sicherheitsfunktionseinheit existiert, sich initialisieren konnte, ihr alle erforderlichen Ressourcen wie Datenbanken, Code, Bibliotheken, Rechenressourcen, Verbindung zum Sensor zur Verfügung stehen und/oder sie funktionsbereit ist. Dies sind Beispiele für den Inhalt einer Zustandsnachricht oder Zustände, die sich aus dem Inhalt ableiten lassen. Die Zustandsnachricht kann sich in einem summarischen OK erschöpfen, das sogar bereits durch das bloße Einlaufen eine Nachricht impliziert sein kann. Die Zustandsnachricht enthält vorzugsweise auch die oben genannten allgemeinen Informationen wie Sender, Zeitstempel und Checksumme.

Die Diagnoseeinheit für die Ausführungsüberwachung ist bevorzugt dafür ausgebildet, eine vorgegebene Ausführungserwartung für den Ausführungsablauf der mindestens einen Sicherheitsfunktionseinheit abzurufen, insbesondere die Ausführungserwartung anhand bisheriger Zustände, Arbeitsabläufe und/oder Arbeitsergebnisse der Logikeinheiten zu modifizieren, und die Ausführungserwartung mit dem aus den Ausführungsnachrichten abgeleiteten Ausführungsablauf zu vergleichen. Die Diagnoseeinheit hat somit die Ausführungserwartung an die zeitliche und logische Abfolge der Ausführungen der mindestens einen Sicherheitsfunktionseinheit. Dies wird mit der tatsächlichen Ausführungsabfolge verglichen, die sich aus den Ausführungsnachrichten ergibt. Abweichungen sind Hinweise auf eine sicherheitsrelevante Fehlfunktion. Wie schon im Falle der Zustandsüberwachung ist nicht unbedingt jede Abweichung eine Fehlfunktion und nicht jede Fehlfunktion sicherheitskritisch mit der Konsequenz einer sicherheitsgerichteten Reaktion der Maschine. Es gibt vorzugsweise Toleranzen beim Vergleich und wie mehrfach diskutiert, möglicherweise eine situationsbezogene Bewertung.

Die Diagnoseeinheit ist bevorzugt dafür ausgebildet, bei einer Bewertung des Vergleichs der Ausführungserwartung mit dem aus den Ausführungsnachrichten abgeleiteten Ausführungsablauf mindestens eines der folgenden Kriterien zu berücksichtigen: eine Ausführungsreihenfolge, das Ausbleiben einer Ausführung, ein zusätzliches Ausführen, eine Abweichung der Ausführungen von einem Zeitraster, eine zu kurze Ausführungsdauer oder eine zu lange Ausführungsdauer. Die Abweichung von einem Zeitraster kann als ein besonders relevanter Sonderfall des Ausbleibens oder Hinzukommens einer Ausführung verstanden werden. Viele dieser Kriterien führen noch nicht zwingend zu einer sicherheitsrelevanten Überwachungslücke. Sie sind aber ein Hinweis, dass das System sich anders verhält als geplant, und wenn die Abweichung nicht im Sicherheitskonzept vorgesehen und damit sicher beherrscht ist, sollte vorsorglich die Maschine in den sicheren Zustand überführt werden.

Die Ausführungsnachricht weist bevorzugt eine Ausführungsinformation über die jeweils letzte Ausführung der Sicherheitsfunktion auf, insbesondere mit Startzeit und/oder Ausführungsdauer. Die Ausführungsdauer kann natürlich auch mittelbar beispielsweise durch eine Endzeit übermittelt werden. Hinzu kommen vorzugsweise die allgemeinen Informationen wie Sender, Zeitstempel der Nachricht und/oder Checksumme. Falls eine Sicherheitsfunktionseinheit mehrere Sicherheitsfunktionen ausführt, kann eine entsprechende Identifikationsnummer der Sicherheitsfunktion ergänzt werden. Allerdings ist vorzugsweise jede Sicherheitsfunktionseinheit nur für eine Sicherheitsfunktion zuständig; bei Bedarf für eine weitere Sicherheitsfunktion kann einfach eine weitere Sicherheitsfunktionseinheit erzeugt werden. Eine Ausführungsnachricht kann auch Ausführungsergebnisse enthalten, beispielsweise für gezielte Tests, in denen geprüft wird, ob testweise eingespeiste Eingangsdaten, wie Sensordaten oder emulierte Sensordaten, zu einem erwarteten Ausführungsergebnis führen. Das Konzept der Zustands- und Ausführungsüberwachung ist aber vorzugsweise unabhängig von konkreten Inhalten, was wiederum nicht ausschließt, dass derartige Tests zusätzlich stattfinden, wobei dafür zur Entkopplung auch eigene Testdiagnoseeinheiten und Testnachrichten verwendet werden können.

Die Ausführungsumgebung weist bevorzugt einen Aggregator auf, der logisch zwischen der mindestens einen Sicherheitsfunktionseinheit und der Diagnoseeinheit angeordnet und dafür ausgebildet ist, die Ausführungsnachrichten zu empfangen und daraus den Ausführungsablauf mit einer Reihenfolge und/oder Dauer der Ausführungen der Sicherheitsfunktionen der mindestens einen Sicherheitsfunktionseinheit zu erzeugen. Der Aggregator übernimmt damit eine Teilaufgabe der Ausführungsüberwachung, die alternativ auch in der Diagnoseeinheit implementiert sein kann. Nach der Aggregation sind die einzelnen Ausführungsnachrichten schon zu dem Ausführungsablauf kombiniert. Der Aggregator arbeitet vorzugsweise in Echtzeit, es geht hier nicht nur darum, Daten mit Hinweisen auf Flaschenhälse und dergleichen für eine nachträgliche händische Optimierung bereitzustellen, sondern um einen Teil der Sicherheitsüberwachung und damit letztlich Unfallvermeidung.

Der mindestens eine Sensor ist bevorzugt als optoelektronischer Sensor, insbesondere Lichtschranke, Lichttaster, Lichtgitter, Laserscanner, FMCW-LIDAR oder Kamera, als Ultraschallsensor, Trägheitssensor, kapazitiver Sensor, magnetischer Sensor, induktiver Sensor, UWB-Sensor oder als Prozessgrößensensor ausgebildet, insbesondere Temperatur-, Durchfluss-, Füllstand- oder Drucksensor, wobei die Sicherheitsvorrichtung insbesondere eine Vielzahl gleicher oder unterschiedlicher Sensoren aufweist. Dies sind einige Beispiele für Sensoren, die für eine Sicherheitsanwendung relevante Sensordaten liefern können. Die konkrete Auswahl des Sensors oder der Sensoren hängt von der jeweiligen Sicherheitsanwendung ab. Die Sensoren können bereits selbst als Sicherheitssensoren ausgebildet sein. Es ist aber erfindungsgemäß ausdrücklich alternativ vorgesehen, die Sicherheit erst nachgelagert durch Tests, zusätzliche Sensorik beziehungsweise (diversitäre) Redundanz oder Mehrkanaligkeit und dergleichen zu erzielen sowie sichere und nicht sichere Sensoren gleicher oder unterschiedlicher Sensorprinzipien miteinander zu kombinieren. Beispielsweise würde ein ausgefallener Sensor keine Sensordaten liefern, dies würde sich in den Zustands- und Ausführungsnachrichten der für den Sensor zuständigen Sicherheitsfunktionseinheit niederschlagen und damit von der Diagnoseeinheit in der Zustands- und Ausführungsüberwachung bemerkt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung einer Sicherheitsvorrichtung;
- Fig. 2: eine schematische Darstellung einer Ausführungsumgebung der Sicherheitsvorrichtung;
- Fig. 3: eine schematische Darstellung einer Ausführungsumgebung beispielhaft mit zwei Rechenknoten;
- Fig. 4: eine schematische Darstellung einer Ausführungsumgebung ähnlich Figur 3 in einer speziellen Ausführungsform unter Verwendung von Kubernetes;
- Fig. 5: eine schematische Darstellung des doppelten Nachrichtenflusses mit Zustands- und Ausführungsnachrichten zu einer System-Diagnoseeinheit;
- Fig. 6: eine schematische Darstellung einer Zustandsüberwachung auf Basis der Zustandsnachrichten; und
- Fig. 7: eine schematische Darstellung einer Ausführungsüberwachung auf Basis der Ausführungsnachrichten.

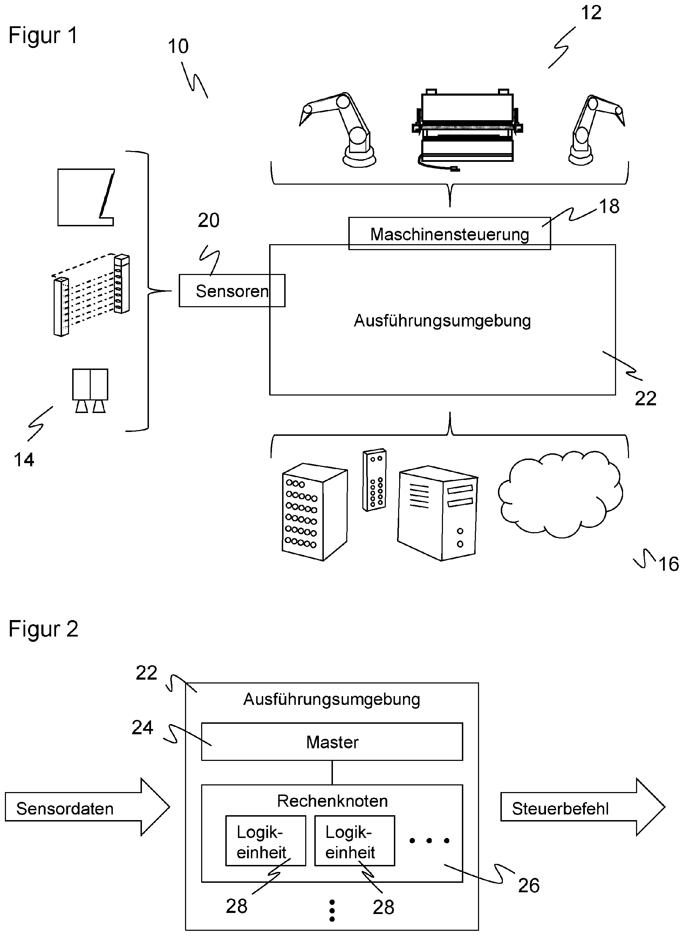

Figur 1 zeigt eine Übersichtsdarstellung einer Sicherheitsvorrichtung 10. Die Begriffe Sicherheit sowie sicher und nicht sicher sind weiterhin so zu verstehen, dass entsprechende Komponenten, Übertragungswege und Auswertungen die einleitend genannten Kriterien von Sicherheitsnormen erfüllen beziehungsweise nicht erfüllen.

Die Sicherheitsvorrichtung 10 lässt sich grob in drei Blöcke mit mindestens einer zu überwachenden Maschine 12, mindestens einem Sensor 14 zur Erzeugung von Sensordaten der überwachten Maschine 12 und mindestens einer Hardwarekomponente 16 mit Rechen- und Speicherressourcen für die Steuer- und Auswertungsfunktionalität zur Auswertung der Sensordaten und Auslösen einer etwaigen sicherheitsgerichteten Reaktion der Maschine 12 unterteilen. Maschine 12, Sensor 14 und Hardwarekomponente 16 werden im Folgenden manchmal im Singular und manchmal Plural angesprochen, was ausdrücklich die jeweils anderen Ausführungsformen mit nur einer jeweiligen Einheit 12, 14, 16 oder mehreren solchen Einheiten 12, 14, 16 einschließen soll.

An den Rändern sind jeweils Beispiele für die drei Blöcke dargestellt. Bei der vorzugsweise industriell eingesetzten Maschine 12 handelt es sich beispielsweise um eine Bearbeitungsmaschine, eine Fertigungsstraße, eine Sortieranlage, eine Prozessanlage, einen Roboter oder ein Fahrzeug, das schienengebunden sein kann oder nicht und insbesondere führerlos ist (AGC, Automated Guided Cart, AGV, Automated Guided Vehicle, AMR, Autonomous Mobile Robot).

Als beispielhafte Sensoren 14 sind ein Laserscanner, ein Lichtgitter und eine Stereokamera als Vertreter optoelektronischer Sensoren dargestellt, zu denen weitere Sensoren wie Lichttaster, Lichtschranken, FMVW LIDAR oder Kameras mit jeglicher 2D- oder 3D-Erfassung zählen, wie Projektions- oder Lichtlaufzeitverfahren. Einige weiterhin nicht abschließende Beispiele für Sensoren 14 sind UWB-Sensoren, Ultraschallsensoren, Trägheitssensoren, kapazitive, magnetische oder induktive Sensoren, oder Prozessgrößensensoren, wie Temperatur-, Durchfluss-, Füllstand- oder Drucksensor. Diese Sensoren 14 können je nach Sicherheitsvorrichtung 10 in beliebiger Anzahl vorhanden sein und beliebig miteinander kombiniert werden.

Denkbare Hardwarekomponenten 16 sind Steuerungen (PLC, Programmable Logic Controller beziehungsweise SPS, speicherprogrammierbare Steuerung), ein Rechner in einem lokalen Netzwerk, insbesondere ein Edge-Device, oder eine eigene oder von Dritten betriebene Cloud, und ganz allgemein jegliche Hardware, die Ressourcen für digitale Datenverarbeitung bereitstellt.

Im Inneren der Figur 1 sind die drei Blöcke nochmals aufgegriffen. Die Maschine 12 ist vorzugsweise über ihre Maschinensteuerung 18 mit der Sicherheitsvorrichtung 10 verbunden, wobei die Maschinensteuerung im Falle eines Roboters eine Robotersteuerung ist, im Falle eines Fahrzeugs eine Fahrzeugsteuerung, in einer Prozessanlage eine Prozesssteuerung und ähnlich für andere Maschinen 12. Die im Inneren als Block 20 zusammengefassten Sensoren 14 erzeugen nicht nur Sensordaten, sondern weisen auch eine nicht einzeln gezeigte Schnittstelle auf, um die Sensordaten in roher oder (vor)verarbeiteter Form auszugeben sowie in aller Regel eine eigene Steuer- und Auswertungseinheit, also eine eigene Hardwarekomponente zur digitalen Datenverarbeitung.

Eine Ausführungsumgebung 22 ist ein zusammenfassender Begriff für eine Verarbeitungseinheit, welche unter anderem die Datenverarbeitung der Sensordaten leistet, um daraus Steuerbefehle an die Maschine 12 oder sonstige sicherheitsrelevante und weitere Informationen zu gewinnen. Die Ausführungsumgebung 22 ist auf den Hardwarekomponenten 16 implementiert und wird nachfolgend unter Bezugnahme auf die Figuren 2 bis 4 noch näher erläutert. Erfindungsgemäß ist nicht festgelegt, auf welcher Hardware die Ausführungsumgebung 22 ausgeführt wird. Die obige Auflistung möglicher Hardwarekomponenten nennt einige Beispiele, die beliebig kombinierbar sind. Ferner ist die Ausführungsumgebung 22 absichtlich mit Überlapp zu der Maschinensteuerung 18 und dem Block 20 der Sensoren 14 eingezeichnet, da auch interne Rechen- und Speicherressourcen der Sensoren 14 und/oder der Maschine 12 von der Ausführungsumgebung 22 genutzt werden können, wiederum in beliebiger Kombination einschließlich der Möglichkeit, dass es gar keine zusätzlichen Hardwarekomponenten 16 außerhalb der Maschine 12 und der Sensoren 14 gibt. Im Folgenden wird davon ausgegangen, dass die Hardwarekomponenten 16 die Rechen- und Speicherressourcen stellen, damit ist dann eine Einbeziehung interner Hardware von Maschine 12 und/oder Sensoren 14 mit gemeint.

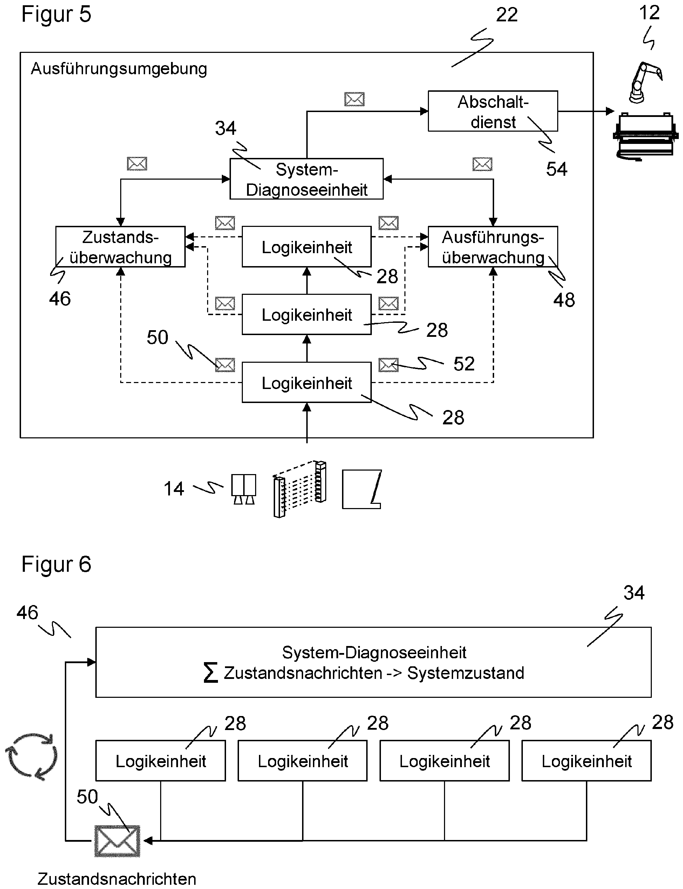

Die Sicherheitsvorrichtung 10 und insbesondere die Ausführungsumgebung 22 stellt nun Sicherheitsfunktionen und Diagnosefunktionen bereit. Eine Sicherheitsfunktion nimmt den Strom zeitlich aufeinanderfolgender Mess- und Ereignisinformationen mit den Sensordaten entgegen und erzeugt entsprechende Auswertungsergebnisse insbesondere in Form von Steuerungssignalen für die Maschine 12. Zudem können Selbstdiagnoseinformationen, Diagnoseinformationen eines Sensors 14 oder Übersichtsinformationen gewonnen werden. Davon abzugrenzen sind die eigentlichen Diagnosefunktionen, mit denen im Rahmen dieser Beschreibung die Überwachung einer Sicherheitsfunktion bezeichnet ist, wie später unter Bezugnahme auf die Figuren 5 bis 7 noch im Detail erläutert. Neben diesen sicherheitsrelevanten Funktionen oder sicheren Automatisierungsfunktionen sind als weitere Option nicht sichere Automatisierungsfunktionen denkbar.

Die Sicherheitsvorrichtung 10 erreicht eine hohe Verfügbarkeit und Robustheit gegenüber unvorhergesehenen internen wie externen Ereignissen, indem Sicherheitsfunktionen als Dienste oder Dienstleistungen der Hardwarekomponenten 16 erbracht werden. Die flexible Zusammensetzung der Hardwarekomponenten 16 und vorzugsweise deren Vernetzung im lokalen oder nicht lokalen Netzwerk beziehungsweise in eine Cloud ermöglichen eine Redundanz und Leistungs-Elastizität, so dass sehr robust mit Unterbrechungen, Störungen und Anforderungsspitzen umgegangen werden kann. Die Sicherheitsvorrichtung 10 erkennt, sobald Fehler nicht mehr aufgefangen werden und damit sicherheitsrelevant werden, und leitet dann eine situationsgerechte Reaktion ein, mit der die Maschine 12 erforderlichenfalls in einen sicheren Zustand überführt wird. Dazu wird die Maschine 12 beispielsweise angehalten, verlangsamt, sie weicht aus oder arbeitet in einem ungefährlichen Modus. Es sei nochmals klargestellt, dass es zwei Klassen von Ereignissen gibt, die eine sicherheitsgerichtete Reaktion auslösen können: zum einen ein als gefährlich eingestuftes Ereignis, das sich aus den Sensordaten ergibt, und zum anderen das Aufdecken eines sicherheitsrelevanten Fehlers.

Figur 2 zeigt eine schematische Darstellung der Ausführungsumgebung 22. Aufgabe der Ausführungsumgebung 22 ist letztlich, aus Sensordaten einen Steuerbefehl abzuleiten, insbesondere ein Sicherheitssignal, das eine sicherheitsgerichtete Reaktion der Maschine 12 auslöst. Die Ausführungsumgebung 22 weist einen Master 24 und mindestens einen Rechenknoten 26 auf. Die erforderliche Rechen- und Speicherkapazität für Master 24 und Rechenknoten 26 stellen die Hardwarekomponenten 16 bereit, die Ausführungsumgebung 22 kann sich transparent über eine Vielzahl von Hardwarekomponenten 16 erstrecken. Ein Rechenknoten 26 ist dabei abstrakt oder virtuell zu verstehen, es gibt nicht notwendig eine 1:1-Beziehung zwischen einem Rechenknoten 26 und einer Hardwarekomponente 16, sondern eine Hardwarekomponente 16 kann mehrere Rechenknoten 26 bereitstellen oder umgekehrt ein Rechenknoten 26 auf mehrere Hardwarekomponenten 16 verteilt sein. Diese Verteilung gilt analog für den Master 24.

Ein Rechenknoten 26 weist eine oder mehrere Logikeinheiten 28 auf. Eine Logikeinheit 28 ist eine in sich abgeschlossene funktionale Einheit, die Informationen entgegennimmt, diese zusammenführt, transformiert, umgestaltet oder allgemein zu einer neuen Information verarbeitet und dann zur Visualisierung, als Steuerbefehl oder zur weiteren Verarbeitung möglichen Abnehmern zur Verfügung stellt, insbesondere weiteren Logikeinheiten 28 oder einer Maschinensteuerung 12. Im Rahmen dieser Beschreibung sind vornehmlich drei Arten von Logikeinheiten 28 zu unterscheiden, die schon kurz angesprochen wurden, nämlich Sicherheitsfunktionseinheiten, Diagnoseeinheiten und optional Automatisierungseinheiten, die nicht zur Sicherheit beitragen, aber die Integration von sonstigen Automatisierungsaufgaben in die Gesamtanwendung ermöglichen.

Die Ausführungsumgebung 22 aktiviert die jeweils benötigten Logikeinheiten 28 und sorgt für deren geordneten Betrieb. Hierzu weist sie den jeweiligen Logikeinheiten 28 die benötigten Ressourcen auf den zur Verfügung stehenden Rechenknoten 26 beziehungsweise Hardwarekomponenten 26 zu und überwacht die Aktivität sowie den Ressourcenbedarf aller Logikeinheiten 28. Vorzugsweise erkennt die Ausführungsumgebung 22, wenn eine Logikeinheit 28 nicht mehr aktiv ist oder es zu Unterbrechungen der Ausführungsumgebung 22 oder der Logikeinheit 28 kam. Sie versucht dann, die Logikeinheit 28 zu reaktivieren und erzeugt eine neue Kopie der Logikeinheit 28, wenn das nicht möglich ist, um so den geordneten Betrieb zu wahren. Das ist allerdings ein Mechanismus, der den Anforderungen an funktionale Sicherheit nicht genügt und nur zum Tragen kommt, sofern die noch unter Bezugnahme auf die Figuren 5 bis 7 zu erläuternde Systemdiagnose nicht zuvor einen sicherheitsrelevanten Fehler aufdeckt, oder beispielsweise während einer Initialisierungs- oder Wiederanlaufphase, in der ohnehin die Maschine 12 noch ruht.

Unterbrechungen können vorhergesehen wie unvorhergesehen sein. Beispielhafte Ursachen sind Fehler in der Infrastruktur, also den Hardwarekomponenten 16, deren Betriebssystem oder den Netzwerkverbindungen, weiterhin versehentliche Fehlbedienungen oder Manipulationen oder der vollständige Verbrauch der Ressourcen einer Hardwarekomponente 16. Kann eine Logikeinheit 28 alle erforderlichen, insbesondere sicherheitsrelevanten Informationen nicht oder jedenfalls nicht schnell genug verarbeiten, so kann die Ausführungsumgebung 22 zusätzliche Kopien der betroffenen Logikeinheit 28 erstellen, um so die Verarbeitung der Informationen weiter zu gewährleisten. Auf diese Weise sorgt die Ausführungsumgebung 22 dafür, dass die Logikeinheit 28 ihre Funktion mit einer erwarteten Qualität und Verfügbarkeit erbringt. Auch solche Reparatur- und Nachbesserungsmaßnahmen sind entsprechend den Bemerkungen im Vorabsatz kein Ersatz der noch zu beschreibenden Systemdiagnose.

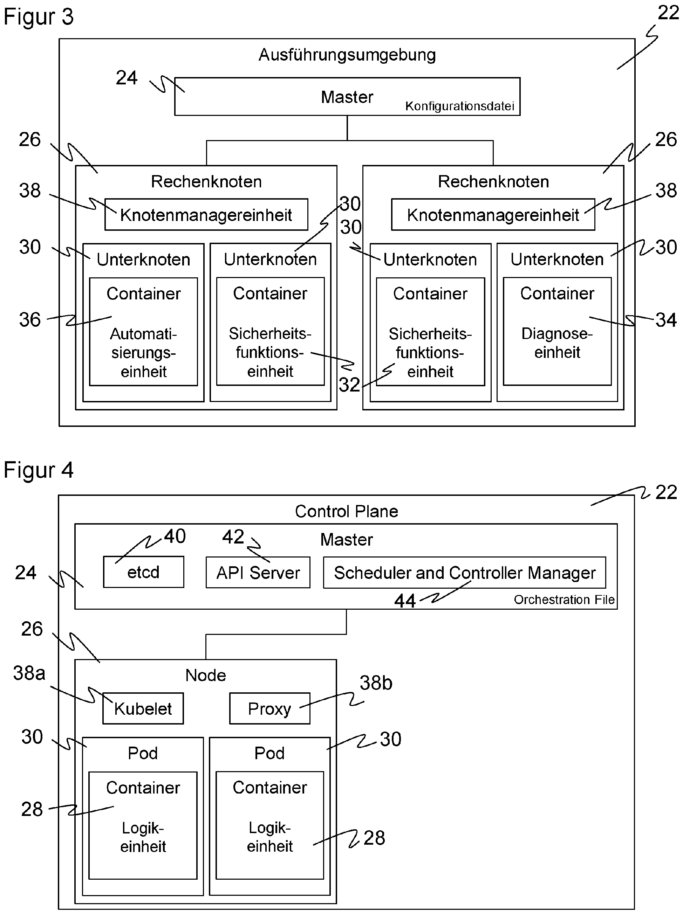

Figur 3 zeigt nochmals eine weitere, vorteilhaft ausdifferenzierte Ausführungsform der Ausführungsumgebung 22 der Sicherheitsvorrichtung 10. Der Master 24 bildet die Verwaltungs- und Kommunikationszentrale. Darin ist eine Konfigurationsinformation beziehungsweise Konfigurationsdatei über die vorhandenen Logikeinheiten 28 gespeichert, so dass der Master 24 die erforderlichen Kenntnisse über die Konfiguration hat, insbesondere welche Logikeinheiten 28 es gibt und geben soll, auf welchen Rechenknoten 26 sie zu finden sind und in welchem Zeitablauf sie Ressourcen erhalten und aufgerufen werden. Die Konfigurationsdatei ist bevorzugt über Signaturen gegen absichtliche und unabsichtliche Manipulationen abgesichert, beispielsweise über Blockchaintechnologien. Hier trifft sich die Sicherheitstechnik (Safety) vorteilhaft mit der Datenintegrität ((Cy-ber-)Security), denn auf diese Weise werden Angriffe abgewehrt oder jedenfalls erkannt, die unabsehbare Unfallfolgen nach sich ziehen könnten.

Die Rechenknoten 26 weisen vorteilhafterweise eine eigene Unterstruktur auf, wobei die nun beschriebenen Einheiten auch nur teilweise vorhanden sein können. Zunächst können Rechenknoten 26 nochmals in Unterknoten 30 unterteilt sein. Die gezeigte Anzahl von zwei Rechenknoten 26 mit jeweils zwei Unterknoten 30 ist rein beispielhaft, es kann beliebig viele Rechenknoten 26 mit jeweils beliebig vielen Unterknoten 30 geben, wobei die Anzahl von Unterknoten 30 über die Rechenknoten 26 variieren kann. Logikeinheiten 28 werden vorzugsweise erst innerhalb der Unterknoten 30 erzeugt, nicht bereits auf Ebene von Rechenknoten 26. Bevorzugt sind Logikeinheiten 28 innerhalb von Containern virtualisiert, also containerisiert. Jeder Unterknoten 30 weist also einen oder mehrere Container mit vorzugsweise jeweils einer Logikeinheit 28 auf. In Figur 3 sind statt generischer Logikeinheiten 28 die drei schon angesprochenen Arten von Logikeinheiten 28 gezeigt, nämlich zwei Sicherheitsfunktionseinheiten 32, eine Diagnoseeinheit 34 und eine Automatisierungseinheit 36. Art und Anzahl der Logikeinheiten 28 sind nur ein Beispiel, wobei die noch unter Bezugnahme auf die Figuren 5 bis 7 zu erläuternde Systemdiagnose in der Tat vorzugsweise mit nur einer Diagnoseeinheit 34 auskommt. Die Zuordnung von Logikeinheiten 28 zu Unterknoten 30 und Rechenknoten 26 ist von der logischen Struktur und Zusammenarbeit der Logikeinheiten 28 gänzlich unabhängig. Aus der ohnehin beispielhaften gezeigten Anordnung von Logikeinheiten 28 lässt sich also über das inhaltliche Zusammenspiel gar nichts schließen, es wären beliebige Umverteilungen bei völlig gleicher Funktionalität möglich, dafür sorgt die Ausführungsumgebung 22.

Eine Knotenmanagereinheit 38 des Rechenknotens 26 koordiniert dessen Unterknoten 30 und die diesem Rechenknoten 26 zugewiesenen Logikeinheiten 28. Die Knotenmanagereinheit 38 kommuniziert ferner mit dem Master 24 sowie weiteren Rechenknoten 26. Die Verwaltungsaufgaben der Ausführungsumgebung 22 können praktisch beliebig auf den Master 24 und die Knotenmanagereinheit 38 verteilt werden, der Master also als verteilt implementiert angesehen werden. Vorteilhaft ist aber, wenn sich der Master um die globalen Aufgaben der Ausführungsumgebung 22 und jede Knotenmanagereinheit 38 um die lokalen Aufgaben des jeweiligen Rechenknotens 26 kümmert. Trotzdem kann der Master 24 vorzugsweise auf mehrere Hardwarekomponenten 16 verteilt oder redundant ausgebildet sein, um dessen Ausfallsicherheit zu erhöhen.

Das typische Beispiel für die Sicherheitsfunktion einer Sicherheitsfunktionseinheit 32 ist die sicherheitsgerichtete Auswertung von Sensordaten des Sensors 14. Möglich sind hier unter anderem Abstandsüberwachung (speziell Speed-and-Separation), Durchgangsüberwachung, Schutzfeldüberwachung oder Kollisionsvermeidung mit dem Ziel einer angemessenen sicherheitsgerichteten Reaktion der Maschine 12 im Gefahrenfall. Dies ist die Kernaufgabe der Sicherheitstechnik, wobei je nach Sensor 14 und Auswertungsverfahren verschiedenste Wege denkbar sind, zwischen einer normalen und einer gefährlichen Situation zu unterscheiden. Für jede Sicherheitsanwendung oder Gruppe von Sicherheitsanwendungen können passende Sicherheitsfunktionseinheiten 32 programmiert oder aus einem Pool vorhandener Sicherheitsfunktionseinheiten 32 ausgewählt werden. Wenn die Arbeitsumgebung 22 ein Sicherheitsfunktionsmodul 32 erzeugt, dann bedeutet das also keineswegs, dass die Sicherheitsfunktion damit neu geschöpft wird. Vielmehr wird auf entsprechende Bibliotheken oder dedizierte fertige Programme auf bekanntem Weg wie mittels Datenträger, Speicher oder Netzwerkverbindung zurückgegriffen. Denkbar ist, dass eine Sicherheitsfunktion teilautomatisch oder automatisch wie aus einem Baukasten fertige Programmmodule zusammenfügt und/oder passend konfiguriert wird.

Eine Diagnoseeinheit 34 kann im Sinne der einleitend genannten EP 4 040 034 A1 verstanden werden und als Watchdog fungieren oder Tests und Diagnosen unterschiedlicher Komplexität durchführen. Dadurch können sichere Algorithmen und Selbstüberwachungsmaßnahmen einer Sicherheitsfunktionseinheit 32 jedenfalls teilweise ersetzt ergänzt werden. Dafür hat die Diagnoseeinheit 34 Erwartungen an die Ausgabe der Sicherheitsfunktionseinheit 32 zu bestimmten Zeiten, sei es in deren regulärem Betrieb oder in Antwort auf bestimmte als Test eingespeiste künstliche Sensorinformationen. Erfindungsgemäß ist eine Diagnoseeinheit 34 eingesetzt, die nicht einzelne Sicherheitsfunktionseinheiten 32 testet oder von ihnen ein bestimmtes Auswertungsergebnis erwartet, auch wenn dies ergänzend möglich ist, sondern die eine Systemdiagnose der an der Absicherung der Maschine 12 beteiligten Sicherheitsfunktionsmodule 32 durchführt, wie später unter Bezugnahme auf die Figuren 5 bis 7 erläutert.

Eine Automatisierungseinheit 36 ist eine Logikeinheit 28 für nicht sicherheitsrelevante Automatisierungsaufgaben, die Sensoren 14 und Maschinen 12 oder Teile davon überwacht, allgemein Aktoren, und die basierend auf diesen Informationen (Teil-)Abläufe steuert oder Informationen darüber bereitstellt. Eine Automatisierungseinheit 36 wird von der Ausführungsumgebung im Prinzip behandelt wie jede Logikeinheit 28, und damit ist sie vorzugsweise ebenfalls containerisiert. Beispiele für Automatisierungsaufgaben sind Qualitätsprüfung, Variantensteuerung, Objekterkennung zum Greifen, Sortieren oder für sonstige Bearbeitungsschritte, Klassifikationen und dergleichen. Die Abgrenzung zu den sicherheitsrelevanten Logikeinheiten 28, also zu einer Sicherheitsfunktionseinheit 32 oder Diagnoseeinheiten 34, besteht darin, dass eine Automatisierungseinheit 36 nicht zum Unfallschutz, d.h. der sicherheitstechnischen Anwendung beiträgt. Ein verlässliches Arbeiten und eine gewisse Überwachung durch die Ausführungsumgebung 22 ist erwünscht, aber dies dient einer Erhöhung der Verfügbarkeit und damit der Produktivität und Qualität, nicht der Sicherheit. Natürlich lässt sich diese Verlässlichkeit auch dadurch herstellen, dass eine Automatisierungseinheit 36 so sorgfältig überwacht wird wie eine Sicherheitsfunktionseinheit 32, so dass dies möglich, aber nicht zwingend erforderlich ist.

Durch den Einsatz der Ausführungsumgebung 22 wird es möglich, Logikeinheiten 28 für eine Sicherheitsanwendung praktisch beliebig auf eine auch stark heterogene Umgebung der Hardwarekomponenten 26 einschließlich eines Edge-Netzwerks oder einer Cloud zu verteilen. Die Ausführungsumgebung 22 kümmert sich um alle erforderlichen Ressourcen und Rahmenbedingungen der Logikeinheiten 28. Sie ruft die erforderlichen Logikeinheiten 28 ins Leben, beendet sie oder verschiebt sie zwischen Rechenknoten 26 und Unterknoten 30.

Die Architektur der Ausführungsumgebung 22 erlaubt zudem ein nahtloses Verschmelzen von Sicherheit und Automatisierung, da Sicherheitsfunktionseinheiten 32, Diagnoseeinheiten 34 und Automatisierungseinheiten 36 in derselben Umgebung und praktisch simultan ausgeführt sowie gleichartig behandelt werden können. Im Falle eines Konflikts gibt die Ausführungsumgebung 22 vorzugsweise den Sicherheitsfunktionseinheiten 32 und Diagnoseeinheiten 34 Priorität, etwa im Falle knapper Ressourcen. In der Konfigurationsdatei können Ausführungsregeln für die Koexistenz von Logikeinheiten 28 der drei verschiedenen Typen berücksichtigt werden.

Figur 4 zeigt eine schematische Darstellung einer Ausführungsumgebung 22 in einer Ausführungsform unter Verwendung von Kubernetes. Die Ausführungsumgebung 22 wird hier control plane genannt. Die Figur 4 ist an die Figur 3 angelehnt, wobei ein Rechenknoten 26 der Übersicht halber weggelassen wurde und nun generische Logikeinheiten 28 stellvertretend für die drei möglichen Typen gezeigt sind. In Kubernetes besitzt der Master 24 eine Unterstruktur. Der (Kubernetes-)Master 24 ist nach wie vor nicht selbst für die Ausführung von Containern oder Logikeinheiten 28 zuständig, sondern kümmert sich um die allgemeinen Abläufe oder die Orchestrierung (orchestration layer). Dementsprechend wird die Konfigurationsdatei als orchestration file bezeichnet. Weiterhin sind eine Datenbank etcd 40 für alle relevanten Daten der Kubernetes-Umgebung, ein API-Server 42 als Schnittstelle zu Kubernetes sowie ein Scheduler and Controller Manager 44 vorhanden, der die eigentliche Orchestrierung vornimmt.

Die vorhandene Hardware wird in Nodes als Rechenknoten 26 unterteilt. In den Nodes wiederum gibt es einen oder mehrere sogenannte Pods als Unterknoten 30 und darin die Container mit den eigentlichen Micro-Services, in diesem Fall den Logikeinheiten 28 samt zugehöriger Containerlaufzeit (container runtime) und damit allen Bibliotheken und für die Logikeinheit 28 zur Laufzeit erforderlichen Abhängigkeiten. Das lokale Management leistet eine nun zweigeteilte Knotenmanagereinheit 38 mit einem sogenannten Kubelet 38a und einem Proxy 38b. Das Kubelet 38a ist ein Agent, der die eigenen Pods und Container des Nodes verwaltet. Der Proxy 38b wiederum enthält die Netzwerkregeln für die Kommunikation zwischen Nodes und mit dem Master.

Kubernetes ist eine bevorzugte, aber nicht die einzige Umsetzungsmöglichkeit für die Ausführungsumgebung 22. Als eine weitere Alternative unter mehreren wäre Docker Swarm zu nennen. Docker selbst ist keine direkte Alternative, sondern ein Werkzeug zum Erzeugen von Containern und somit sowohl mit Kubernetes als auch Docker Swarm kombinierbar, die dann die Container orchestrieren.

Figur 5 zeigt eine weitere schematische Darstellung der Ausführungsumgebung 22 zur Illustration einer Systemdiagnose durch eine Zustandsüberwachung und eine Ausführungsüberwachung. Zuständig dafür ist eine System-Diagnoseeinheit 34 als spezielle Ausprägung einer Diagnoseeinheit 34. Zu Überwachen sind hier rein beispielhaft drei Logikeinheiten 28, die in einer Sequenz arbeiten, um Daten eines Sensors 14 auszuwerten. Die Erfindung ist darauf nicht beschränkt, es kann eine beliebige Anzahl Logikeinheiten 28 in beliebiger gegenseitiger Verbindung und mit oder ohne eigene Verbindung zu einem Sensor 14 sein. Die Logikeinheiten 28 sind vorzugsweise Sicherheitsfunktionseinheiten 32. Es können weitere Diagnoseeinheiten 34 vorgesehen sein, die beispielsweise in Ergänzung der Systemdiagnose dediziert bestimmte Sicherheitsfunktionseinheiten 32 überwachen oder testen. Ferner ist auch möglich, Automatisierungseinheiten 36 in die Systemdiagnose einzubinden, auch wenn dafür eine sichere Überwachung für die Gefahren- oder Unfallvermeidung an sich nicht erforderlich wäre. Auf die konkrete Ausgestaltung der Logikeinheiten 28 kommt es im Folgenden nicht an, deshalb sind die generischen Logikeinheiten 28 dargestellt.

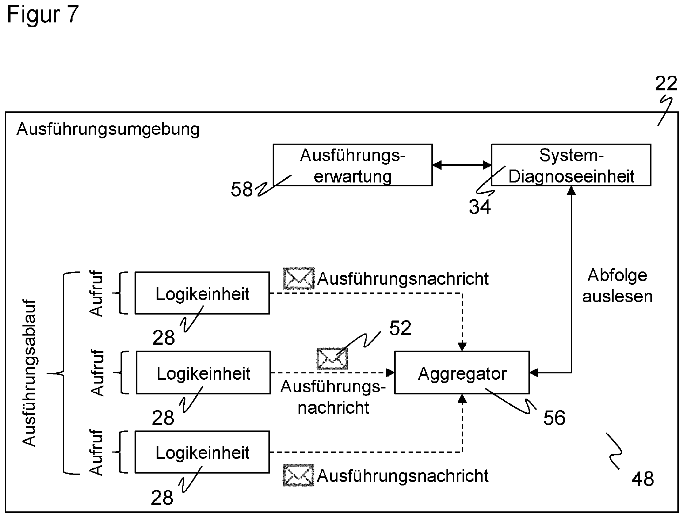

Die System-Diagnoseeinheit 34 ist für eine Zustandsüberwachung 46 und eine Ausführungsüberwachung 48 zuständig. Daraus kann eine abschließende Beurteilung des sicheren Zustands des Gesamtsystems abgeleitet werden. Die Zustandsüberwachung 46 wird im Anschluss unter Bezugnahme auf die Figur 6, die Ausführungsüberwachung 48 unter Bezugnahme auf die Figur 7 noch näher erläutert. In Figur 5 ist eine einzige System-Diagnoseeinheit 34 dargestellt, mit eigenen Blöcken für die Zustandsüberwachung 46 und die Ausführungsüberwachung 48. Das dient vor allem dem Verständnis des Konzepts, es ist ebenso denkbar, die Zustandsüberwachung 46 und die Ausführungsüberwachung als Teil der System-Diagnoseeinheit 34 aufzufassen oder die Funktionalität alternativ auf andere Weise zu verteilen.

Die Logikeinheiten 28 kommunizieren über ein Nachrichtensystem oder Nachrichtenübermittlungssystem mit der System-Diagnoseeinheit 34. Das Nachrichtensystem ist Teil der Ausführungsumgebung 22 oder dazu ergänzend implementiert. Es gibt einen doppelten Nachrichtenfluss von Status- oder Zustandsnachrichten 50 der Zustandsüberwachung 46, die über den inneren Zustand der sendenden Logikeinheit 28 informieren, und Ausführungsnachrichten 52 der Ausführungsüberwachung 52, die Auskunft über Dienst-Anforderungen beziehungsweise -Ausführungen der sendenden Logikeinheit 28 geben. Das Nachrichtensystem ist folglich gedoppelt vorgesehen oder mit zwei Nachrichtenkanälen ausgebildet. Vorzugsweise enthält jede Nachricht 50, 52 Metadaten, die den Nachrichtenstrom absichern. Diese Metadaten umfassen beispielsweise eine Senderinformation, einen Zeitstempel, eine Sequenzinformation und/oder eine Checksumme über die Nachrichteninhalte.

Die System-Diagnoseeinheit 34 ermittelt auf Basis der erhaltenen Zustandsnachrichten 50 einen Gesamtzustand der Sicherheitsvorrichtung 10 und entsprechend aus den erhaltenen Ausführungsnachrichten 52 eine Gesamtaussage über die Bearbeitung von Dienstanforderungen beziehungsweise einen Ausführungsablauf der Sicherheitsvorrichtung 10. Durch Vergleich mit zugehörigen Erwartungen werden Fehler in der Sicherheitsvorrichtung 10 aufgedeckt, und im Fehlerfall wird eine angemessene sicherheitsgerichtete Reaktion eingeleitet.

Nicht jede Unstimmigkeit bedeutet sofort einen sicherheitsrelevanten Fehler. So können Abweichungen je nach Sicherheitsniveau für eine gewisse Zeit geduldet werden, oder es werden Reparaturmechanismen versucht, um wieder in einen fehlerfreien Systemzustand zu gelangen. Dabei ist jedoch genau durch das Sicherheitskonzept spezifiziert, in welchem zeitlichen und sonstigen Rahmen Fehler vorerst nur beobachtet werden können. Weiterhin kann es Abstufungen von Fehlern geben, die unterschiedlich drastische Absicherungsmaßnahmen erfordern sowie situationsbedingte Bewertungen von Fehlern. Letzteres führt zu einem differenzierteren Begriff von Sicherheit und sicher, der die aktuelle Situation einbezieht. Der Ausfall einer sicherheitsrelevanten Komponente oder das Nichtausführen einer sicherheitsrelevanten Funktion kann unter bestimmten Voraussetzungen, d.h. situationsbezogen, noch nicht zwangsläufig einen unsicheren Systemzustand bedeuten. Beispielsweise könnte ein Sensor 14 ausgefallen sein, der einen Kollaborationsbereich mit einem Roboter überwacht, während sich der Roboter mit Sicherheit nicht in diesem Bereich aufhält, was wiederum durch eine robotereigene, sichere Koordinatenbegrenzung gewährleistet sein kann. Solche situationsbezogenen Regeln für die Bewertung, ob eine sicherheitsgerichtete Reaktion erfolgen muss, müssen der System-Diagnoseeinheit 34 dann aber ebenfalls in einer mit dem Sicherheitskonzept abgestimmten Weise bekannt sein.

Die sicherheitsgerichtete Reaktion der Maschine 12 wird vorzugsweise über einen Abschaltdienst 54 ausgelöst. Das kann eine weitere Sicherheitsfunktionseinheit 32 sein, die vorzugsweise entgegen der Darstellung in die Systemüberwachung eingebunden sein kann. Der Abschaltdienst 54 arbeitet vorzugsweise invertiert, d.h. es wird ein positives Signal von der System-Diagnoseeinheit 34 erwartet und an die Maschine 12 weitergegeben, dass die Maschine 12 arbeiten darf. Damit wird automatisch ein Ausfall der System-Diagnoseeinheit 34 oder des Abschaltdienstes 54 aufgefangen.

Die Maschine wird von dem Abschaltdienst 54 trotz seines Namens nicht zwangsläufig abgeschaltet, das ist nur die drastischste Maßnahme. Je nach Fehler kann ein sicherer Zustand bereits durch ein Verlangsamen, eine Begrenzung der Geschwindigkeit und/oder des Arbeitsraums oder dergleichen erreicht werden. Das hat dann geringere Auswirkungen auf die Produktivität. Der Abschaltdienst 54 kann auch von einer der Logikeinheiten 28 angefordert werden, wenn dort durch Auswertung der Sensordaten eine Gefahrensituation erkannt wird. Ein entsprechender Pfeil wurde in Figur 5 der Übersicht halber weggelassen.

Figur 6 zeigt eine schematische Darstellung der Zustandsüberwachung 46 auf Basis der Zustandsnachrichten 50. Vorzugsweise werden Zustandsnachrichten 50 kontinuierlich oder regelmäßig in dem Sinne an die System-Diagnoseeinheit 34 übermittelt, dass spätestens nach einer festgelegten Dauer beispielsweise von einigen Millisekunden eine Zustandsnachricht 50 von jeder überwachten Logikeinheit 28 eingehen muss. Ein fester Zyklus oder Zeittakt ist dabei denkbar, aber nicht erforderlich, zeitliche Schwankungen innerhalb des Rahmens der festgelegten Dauer sind also möglich.

Die Logikeinheiten 28 führen bevorzugt vor dem Absenden einer Zustandsnachricht 50 eine Selbstdiagnose durch. Das ist nicht zwingend in jeder Ausführungsform der Fall, eine Zustandsnachricht 50 kann ein reines Lebenszeichen oder die Weitergabe interner Zustände ohne vorherige Selbstdiagnose sein, oder die Selbstdiagnose wird seltener durchgeführt, als Zustandsnachrichten 50 gesendet werden. Die Selbstdiagnose überprüft beispielsweise die in ihrem Speicher abgelegten Daten und Programmbestandteile, die Verarbeitungsergebnisse und die Systemzeit. Entsprechend beinhalten die Zustandsnachrichten 50 Informationen über den internen Zustand der Logikeinheit 28 und geben Aufschluss darüber, ob die Logikeinheit in der Lage ist, ihre Aufgabe korrekt zu erfüllen, etwa ob die Logikeinheit 28 alle notwendigen Daten in ausreichender Zeit zur Verfügung hat. Zudem enthalten die Zustandsnachrichten 50 vorzugsweise die oben genannten Metadaten.

Die System-Diagnoseeinheit 34 interpretiert den Inhalt der Zustandsnachrichten 50 und ordnet dies den jeweiligen Logikeinheiten 28 zu. Die einzelnen Zustände der Logikeinheiten 28 werden zu einem Gesamtzustand der Sicherheitsvorrichtung 10 aus Sicherheitssicht kombiniert. Die System-Diagnoseeinheit 34 hat eine vorgegebene Erwartung, welcher Gesamtzustand in welcher Situation die Sicherheit gewährleistet. Zeigt der Vergleich mit dem aktuellen Gesamtzustand unter möglicher Berücksichtigung der bereits diskutierten Toleranzen und situationsbezogenen Anpassungen, dass diese Erwartung nicht erfüllt ist, so ist dies ein sicherheitsrelevanter Fehler. Es wird eine entsprechende Nachricht an den Abschaltdienst 54 gesendet, um die Maschine 12 in einen dem Fehler angemessenen sicheren Zustand zu überführen.

Figur 7 zeigt eine schematische Darstellung der Ausführungsüberwachung 48 auf Basis der Ausführungsnachrichten 52. Die erste Logikeinheit 28 innerhalb eines Dienstes erzeugt eine eindeutige Programmsequenzkennzeichnung, kurz Sequenz, die alle beteiligten Logikeinheiten 28 eines Dienstes bei ihrer Ausführung referenzieren. Die Sequenz wird den direkt nachfolgenden Logikeinheiten 28 nach Beendigung der jeweiligen Ausführung propagiert, so dass sich diese bei der Erstellung ihrer Ausführungsnachricht 52 darauf beziehen können. Eine Ausführungsnachricht 52 umfasst, vorzugsweise neben den oben genannten Metadaten, eine Startzeit und eine Dauer der jeweiligen Ausführung. Weitere mögliche Bestandteile einer Ausführungsnachricht 52 sind eine eindeutige Bezeichnung dessen, was ausgeführt wurde, und die Sequenz. Ausführungsnachrichten 52 werden vorzugsweise ereignisbasiert jeweils nach vollständiger Ausführung gesendet. Da häufig Sensordaten ausgewertet werden, die zyklisch bereitstehen, kann indirekt auch ein ereignisbasierter Nachrichtenstrom zyklisch oder regelmäßig im oben definierten Sinne werden.

Ein Aggregator 56 sammelt die Ausführungsnachrichten 52 und bringt die Ausführungen anhand der eindeutigen Programmsequenzkennzeichnung in eine logische und zeitliche Anordnung beziehungsweise in einen Ausführungsablauf. Somit beschreibt der Ausführungsablauf die tatsächlichen Ausführungen. Die System-Diagnoseeinheit 34 hat andererseits Zugriff auf eine Ausführungserwartung 58, d.h. einen erwarteten Ausführungsablauf. Diese Ausführungserwartung 58 ist eine Vorgabe, die typischerweise ein Sicherheitsexperte im Zusammenhang mit dem Sicherheitskonzept festgelegt hat, die aber je nach Ausführungsform noch von der System-Diagnoseeinheit 34 modifiziert werden kann. Sollte die System-Diagnoseeinheit 34 keinen Zugriff auf die Ausführungserwartung 58 haben, so ist das jedenfalls nach einer zeitlichen Toleranz ein sicherheitsrelevanter Fehler mit der Konsequenz, dass der Abschaltdienst 54 angefordert wird, um die Maschine 12 abzusichern. Aggregator 56 und Ausführungserwartung 58 sind separat dargestellt und vorzugsweise so implementiert, können aber alternativ als Teil der System-Diagnoseeinheit 34 aufgefasst werden.

Die System-Diagnoseeinheit 34 vergleicht nun im Rahmen der Ausführungsüberwachung 48 den von dem Aggregator 56 mitgeteilten Ausführungsablauf mit der Ausführungserwartung 58, um zeitliche und logische Fehler in der Bearbeitung einer Dienstanforderung zu erkennen. Bei Unstimmigkeiten können Schritte zur Stabilisierung eingeleitet werden, beziehungsweise es wird, sobald ein Fehler nicht mehr eindeutig beherrschbar ist, über den Abschaltdienst 54 die Maschine 12 abgesichert.

Einige Beispiele für überprüfte Aspekte der Ausführungsüberwachung 48 sind: Es fehlt eine Ausführung, um einen Dienst vollständig abzuarbeiten, es wurde eine unerwartete, zusätzliche Ausführung gemeldet, sei es eine unerwartete Mehrfachausführung einer am Dienst beteiligten Logikeinheit 28 oder eine Ausführung einer am Dienst nicht beteiligten Logikeinheit 28, eine Ausführungszeit ist zu kurz oder zu lang, und dies samt Quantifizierung zur Beurteilung, ob das schwerwiegend ist, die verstrichene Zeit zwischen Ausführungen von einzelnen Ausführungen einer Logikeinheit 28. Welche dieser Unstimmigkeiten sicherheitsrelevant sind, in welchem Rahmen und in welcher Situation sie noch toleriert werden können und welche angemessene Sicherungsmaßnahme jeweils eingeleitet wird, ist in der Ausführungserwartung 58 beziehungsweise der System-Diagnoseeinheit 34 hinterlegt.

## Patentansprüche

1. Sicherheitsvorrichtung (10) zur Überwachung mindestens einer Maschine (12), wobei die Sicherheitsvorrichtung (10) mindestens einen Sensor (14) zum Erzeugen von Sensordaten zu der Maschine (12) sowie eine mindestens mittelbar mit dem Sensor (14) und der Maschine (12) verbundene Verarbeitungseinheit (16, 22) für die Sensordaten aufweist, die als Ausführungsumgebung (22) mit mindestens einem Rechenknoten (26) sowie dafür ausgebildet ist, eine Vielzahl von Logikeinheiten (28) auf dem mindestens einen Rechenknoten (26) ablaufen zu lassen, wobei mindestens eine Logikeinheit (28) als Sicherheitsfunktionseinheit (32) zur sicherheitsgerichteten Auswertung der Sensordaten und mindestens eine Logikeinheit (28) als Diagnoseeinheit (34) zur Überwachung der mindestens einen Sicherheitsfunktionseinheit (32) ausgebildet ist,
**dadurch gekennzeichnet,**
**dass** die mindestens eine Sicherheitsfunktionseinheit (32) dafür ausgebildet ist, Zustandsnachrichten (50) und Ausführungsnachrichten (52) an die Diagnoseeinheit (34) zu übermitteln, wobei Zustandsnachrichten (50) Auskunft über einen Zustand der mindestens einen Sicherheitsfunktionseinheit (32) und damit über deren Einsatzbereitschaft und mögliche Einschränkungen oder Fehler geben, und wobei eine Ausführungsnachrichten (52) die Ausführung einer Sicherheitsfunktion oder eines Dienstes betreffen, den die mindestens eine Sicherheitsfunktionseinheit (32) ausführt, woraus ein Ausführungsablauf der ausgeführten Sicherheitsfunktionen oder Dienste erzeugt wird, dass die Diagnoseeinheit (34) dafür ausgebildet ist, in einer Zustandsüberwachung (46) anhand von Zuständen aus den Zustandsnachrichten (50) und in einer Ausführungsüberwachung (48) anhand des aus den Ausführungsnachrichten (52) erzeugten Ausführungsablaufs eine sicherheitsrelevante Fehlfunktion der Sicherheitsvorrichtung (10) zu erkennen und dass die Ausführungsumgebung (22) ein Nachrichtensystem mit zwei Nachrichtenkanälen aufweist, über das die mindestens eine Sicherheitsfunktionseinheit (32) Zustandsnachrichten (50) und Ausführungsnachrichten (52) nebeneinander an die Diagnoseeinheit übermittelt.

2. Sicherheitsvorrichtung (10) nach Anspruch 1,
wobei die Diagnoseeinheit (34) dafür ausgebildet ist, situationsbezogen festzustellen, ob eine Fehlfunktion sicherheitsrelevant ist.

3. Sicherheitsvorrichtung (10) nach Anspruch 1 oder 2,
die eine Abschalteinheit (54) aufweist, die dafür ausgebildet ist, auf Anweisung der Diagnoseeinheit (34) im Falle einer sicherheitsrelevanten Fehlfunktion oder auf Anweisung einer Sicherheitsfunktionseinheit (32) bei Erkennung einer Gefahrensituation anhand der ausgewerteten Sensordaten die Maschine (12) in einen sicheren Zustand zu versetzen.

4. Sicherheitsvorrichtung (10) nach einem der vorhergehenden Ansprüche, wobei die mindestens eine Sicherheitsfunktionseinheit (32) dafür ausgebildet ist, regelmäßig eine Zustandsnachricht (50) zu übermitteln und/oder ereignisbasiert für eine jeweilige Ausführung ihrer Sicherheitsfunktion eine Ausführungsnachricht (52) zu übermitteln.

5. Sicherheitsvorrichtung (10) nach einem der vorhergehenden Ansprüche, wobei die Zustandsnachricht (50) und/oder die Ausführungsnachricht (52) vorzugsweise eine Senderinformation über die sendende Sicherheitsfunktionseinheit (32), einen Zeitstempel, eine Sequenz und/oder eine Checksumme aufweist.

6. Sicherheitsvorrichtung (10) nach einem der vorhergehenden Ansprüche, wobei die mindestens eine Sicherheitsfunktionseinheit (32) für eine Selbstdiagnose ausgebildet ist, in der sie ihre eigenen Daten, Programme, Verarbeitungsergebnisse und/oder die Übereinstimmung mit einer Systemzeit überprüft.

7. Sicherheitsvorrichtung (10) nach einem der vorhergehenden Ansprüche, wobei die Diagnoseeinheit (34) für die Zustandsüberwachung (46) dafür ausgebildet ist, eine vorgegebene Zustandserwartung für die Zustände der mindestens einen Sicherheitsfunktionseinheit (32) abzurufen, insbesondere die Zustandserwartung anhand bisheriger Zustände, Arbeitsabläufe und/oder Arbeitsergebnisse der Logikeinheiten (28) zu modifizieren, und die Zustandserwartung mit einem aus den Zuständen der Zustandsnachrichten (50) abgeleiteten gegenwärtigen Gesamtzustand zu vergleichen.

8. Sicherheitsvorrichtung (10) nach einem der vorhergehenden Ansprüche, wobei die Zustandsnachricht (50) Auskunft darüber gibt, ob die die Zustandsnachricht (50) übermittelnde Sicherheitsfunktionseinheit (32) existiert, sie sich initialisieren konnte, ihr alle erforderlichen Ressourcen zur Verfügung stehen und/oder sie funktionsbereit ist.

9. Sicherheitsvorrichtung (10) nach einem der vorhergehenden Ansprüche, wobei die Diagnoseeinheit (34) für die Ausführungsüberwachung (48) dafür ausgebildet ist, eine vorgegebene Ausführungserwartung (58) für den Ausführungsablauf der mindestens einen Sicherheitsfunktionseinheit (32) abzurufen, insbesondere die Ausführungserwartung (58) anhand bisheriger Zustände, Arbeitsabläufe und/oder Arbeitsergebnisse der Logikeinheiten (28) zu modifizieren, und die Ausführungserwartung (58) mit dem aus den Ausführungsnachrichten (52) abgeleiteten Ausführungsablauf zu vergleichen.

10. Sicherheitsvorrichtung (10) nach Anspruch 9,
wobei die Diagnoseeinheit (34) dafür ausgebildet ist, bei einer Bewertung des Vergleichs der Ausführungserwartung (58) mit dem aus den Ausführungsnachrichten (52) abgeleiteten Ausführungsablauf mindestens eines der folgenden Kriterien zu berücksichtigen: eine Ausführungsreihenfolge, das Ausbleiben einer Ausführung, ein zusätzliches Ausführen, eine Abweichung der Ausführungen von einem Zeitraster, eine zu kurze Ausführungsdauer oder eine zu lange Ausführungsdauer.

11. Sicherheitsvorrichtung (10) nach einem der vorhergehenden Ansprüche, wobei die Ausführungsnachricht (52) eine Ausführungsinformation über die jeweils letzte Ausführung der Sicherheitsfunktion aufweist, insbesondere mit Startzeit und/oder Ausführungsdauer.

12. Sicherheitsvorrichtung (10) nach einem der vorhergehenden Ansprüche, wobei die Ausführungsumgebung (22) einen Aggregator (56) aufweist, der logisch zwischen der mindestens einen Sicherheitsfunktionseinheit (32) und der Diagnoseeinheit (34) angeordnet und dafür ausgebildet ist, die Ausführungsnachrichten (52) zu empfangen und daraus den Ausführungsablauf mit einer Reihenfolge und/oder Dauer der Ausführungen der Sicherheitsfunktionen der mindestens einen Sicherheitsfunktionseinheit (32) zu erzeugen, insbesondere in Echtzeit.

13. Sicherheitsvorrichtung (10) nach einem der vorhergehenden Ansprüche, wobei der mindestens eine Sensor (14) als optoelektronischer Sensor, insbesondere Lichtschranke, Lichttaster, Lichtgitter, Laserscanner, FMCW-LIDAR oder Kamera, als Ultraschallsensor, Trägheitssensor, kapazitiver Sensor, magnetischer Sensor, induktiver Sensor, UWB-Sensor oder als Prozessgrößensensor ausgebildet ist, insbesondere Temperatur-, Durchfluss-, Füllstand- oder Drucksensor, und wobei die Sicherheitsvorrichtung (10) insbesondere eine Vielzahl gleicher oder unterschiedlicher Sensoren (14) aufweist.

14. Computerimplementiertes Verfahren zur Überwachung mindestens einer Maschine (12), bei dem mindestens ein Sensor (14) Sensordaten zu der Maschine (12) erzeugt und eine mindestens mittelbar mit dem Sensor (14) und der Maschine (12) verbundene Verarbeitungseinheit (16, 22) für die Sensordaten als Ausführungsumgebung (22) eine Vielzahl von Logikeinheiten (28) auf mindestens einem Rechenknoten (26) ablaufen lässt, wobei mindestens eine Logikeinheit (28) als Sicherheitsfunktionseinheit (32) die Sensordaten sicherheitsgerichtet auswertet und mindestens eine Logikeinheit (28) als Diagnoseeinheit (34) die mindestens eine Sicherheitsfunktionseinheit (32) überwacht,
**dadurch gekennzeichnet,**
**dass** die mindestens eine Sicherheitsfunktionseinheit (32) Zustandsnachrichten (50) und Ausführungsnachrichten (52) an die Diagnoseeinheit (34) übermittelt, wobei Zustandsnachrichten (50) Auskunft über einen Zustand der mindestens einen Sicherheitsfunktionseinheit (32) und damit über deren Einsatzbereitschaft und mögliche Einschränkungen oder Fehler geben, und wobei eine Ausführungsnachrichten (52) die Ausführung einer Sicherheitsfunktion oder eines Dienstes betreffen, den die mindestens eine Sicherheitsfunktionseinheit (32) ausführt, woraus ein Ausführungsablauf der ausgeführten Sicherheitsfunktionen oder Dienste erzeugt wird, dass die Diagnoseeinheit (34) in einer Zustandsüberwachung (46) anhand von Zuständen aus den Zustandsnachrichten (50) und in einer Ausführungsüberwachung (48) anhand eines aus den Ausführungsnachrichten (52) erzeugten Ausführungsablaufs eine sicherheitsrelevante Fehlfunktion erkennt und dass die Ausführungsumgebung (22) ein Nachrichtensystem mit zwei Nachrichtenkanälen aufweist, über das die mindestens eine Sicherheitsfunktionseinheit (32) Zustandsnachrichten (50) und Ausführungsnachrichten (52) nebeneinander an die Diagnoseeinheit übermittelt.

## Claims

1. A safety device (10) for monitoring at least one machine (12), the safety device (10) comprising at least one sensor (14) for generating sensor data relating to the machine (12) and a processing unit (16, 22) for the sensor data, which is connected at least indirectly to the sensor (14) and the machine (12) and is configured as a runtime environment (22) with at least one computing node (26) and for running a plurality of logic units (28) on the at least one computing node (26), at least one logic unit (28) being configured as a safety function unit (32) for safety-oriented evaluation of the sensor data and at least one logic unit (28) being configured as a diagnostic unit (34) for monitoring the at least one safety function unit (32),
**characterized in that** the at least one safety function unit (32) is configured to transmit status messages (50) and execution messages (52) to the diagnostic unit (34), wherein status messages (50) provide information about a status of the at least one safety function unit (32) and thus about its operational readiness and possible restrictions or errors, and wherein an execution message (52) relates to the execution of a safety function or a service which the at least one safety function unit (32) executes, from which an execution sequence of the executed safety functions or services is generated, **in that** the diagnostic unit (34) is configured to detect a safety-relevant malfunction of the safety device (10) in a status monitoring (46) using statuses from the status messages (50) and in an execution monitoring (48) using the execution sequence generated from the execution messages (52), and **in that** the runtime environment (22) comprises a message system with two message channels, via which the at least one safety function unit (32) transmits status messages (50) and execution messages (52) in parallel to the diagnostic unit.

2. The safety device (10) according to claim 1,
wherein the diagnostic unit (34) is configured to determine, depending on the situation, whether a malfunction is relevant to safety.

3. The safety device (10) according to claim 1 or 2,
that comprises a switch-off unit (54) configured to transfer the machine (12) into a safe state on the instruction of the diagnostic unit (34) in the event of a safety-relevant malfunction or on the instruction of a safety function unit (32) when a hazardous situation is detected on the basis of the evaluated sensor data.

4. The safety device (10) according to any of the preceding claims,
wherein the at least one safety function unit (32) is configured to regularly transmit a status message (50) and/or to transmit an execution message (52) based on an event for a respective execution of its safety function.

5. The safety device (10) according to any of the preceding claims,
wherein the status message (50) and/or the execution message (52) preferably comprises transmitter information about the transmitting safety function unit (32), a timestamp, a sequence and/or a checksum.

6. The safety device (10) according to any of the preceding claims,
wherein the at least one safety function unit (32) is configured for a self-diagnosis in which it checks its own data, programs, processing results and/or compliance with a system time.

7. The safety device (10) according to any of the preceding claims,
wherein the diagnostic unit (34) for the status monitoring (46) is configured to retrieve a predetermined status expectation for the statuses of the at least one safety function unit (32), in particular to modify the status expectation on the basis of previous statuses, operating sequences and/or operating results of the logic units (28), and to compare the status expectation with a current overall status derived from the statuses of the status messages (50).

8. The safety device (10) according to any of the preceding claims,
wherein the status message (50) provides information as to whether the safety function unit (32) transmitting the status message (50) exists, it was able to initialize, it has all required resources available and/or it is ready for operation.

9. The safety device (10) according to any of the preceding claims,
wherein the diagnostic unit (34) for the execution monitoring (48) is configured to retrieve a predetermined execution expectation (58) for the execution sequence of the at least one safety function unit (32), in particular to modify the execution expectation (58) on the basis of previous states, work sequences and/or work results of the logic units (28), and to compare the execution expectation (58) with the execution sequence derived from the execution messages (52).

10. The safety device (10) according to claim 9,
wherein the diagnostic unit (34) is configured to take into account at least one of the following criteria when evaluating the comparison of the execution expectation (58) with the execution sequence derived from the execution messages (52): an execution sequence, the absence of an execution, an additional execution, a deviation of the executions from a time grid, an execution duration that is too short or an execution duration that is too long.

11. The safety device (10) according to any of the preceding claims,
wherein the execution message (52) comprises execution information about the respective last execution of the safety function, in particular with start time and/or execution duration.

12. The safety device (10) according to any of the preceding claims,
wherein the runtime environment (22) comprises an aggregator (56) which is logically arranged between the at least one safety function unit (32) and the diagnostic unit (34) and is configured to receive the execution messages (52) and to generate therefrom the execution sequence with a sequence and/or duration of the executions of the safety functions of the at least one safety function unit (32), in particular in real time.

13. The safety device (10) according to any of the preceding claims,
wherein the at least one sensor (14) is configured as an optoelectronic sensor, in particular a light barrier, light scanner, light grid, laser scanner, FMCW-LIDAR or camera, as an ultrasonic sensor, inertial sensor, capacitive sensor, magnetic sensor, inductive sensor, UWB sensor or as a process variable sensor, in particular a temperature sensor, flow sensor, level sensor or pressure sensor, and wherein the safety device (10) comprises in particular a plurality of identical or different sensors (14).

14. A computer-implemented method for monitoring at least one machine (12), wherein at least one sensor (14) generates sensor data relating to the machine (12) and a processing unit (16, 22) for the sensor data as a runtime environment (22) runs a plurality of logic units (28) on at least one computing node (26), wherein at least one logic unit (28) as a safety function unit (32) evaluates the sensor data in a safety-oriented manner and at least one logic unit (28) as a diagnostic unit (34) monitors the at least one safety function unit (32), **characterized in that** the at least one safety function unit (32) transmits status messages (50) and execution messages (52) to the diagnostic unit (34), wherein status messages (50) provide information about a status of the at least one safety function unit (32) and thus about its operational readiness and possible restrictions or errors, and wherein an execution message (52) relates to the execution of a safety function or a service which the at least one safety function unit (32) executes, from which an execution sequence of the executed safety functions or services is generated, **in that** the diagnostic unit (34) recognizes a safety-relevant malfunction in a status monitoring (46) using statuses from the status messages (50) and in an execution monitoring (48) using an execution sequence generated from the execution messages (52), and **in that** the runtime environment (22) comprises a message system with two message channels, via which the at least one safety function unit (32) transmits status messages (50) and execution messages (52) in parallel to the diagnostic unit.

## Revendications

1. Dispositif de sécurité (10) pour surveiller au moins une machine (12), le dispositif de sécurité (10) comprenant au moins un capteur (14) pour générer des données de capteur relatives à la machine (12) ainsi qu'une unité de traitement (16, 22) pour les données de capteur, reliée au moins indirectement au capteur (14) et à la machine (12), qui est conçue comme environnement d'exécution (22) avec au moins un noeud de calcul (26) et destinée à faire fonctionner une pluralité d'unités logiques (28) sur ledit au moins un noeud de calcul (26), au moins une unité logique (28) étant conçue comme une unité fonctionnelle de sécurité (32) pour l'évaluation orientée sécurité des données de capteur, et au moins une unité logique (28) étant conçue comme une unité de diagnostic (34) pour surveiller ladite au moins une unité fonctionnelle de sécurité (32),
**caractérisé en ce que**
ladite au moins une unité fonctionnelle de sécurité (32) est conçue pour transmettre des messages d'état (50) et des messages d'exécution (52) à l'unité de diagnostic (34), sachant que les messages d'état (50) renseignent sur un état de ladite au moins une unité fonctionnelle de sécurité (32) et donc sur sa disponibilité et sur d'éventuelles restrictions ou erreurs, et que les messages d'exécution (52) concernent l'exécution d'une fonction de sécurité ou d'un service que ladite au moins une unité fonctionnelle de sécurité (32) exécute, ce qui définit un déroulement d'exécution des fonctions de sécurité ou des services exécutés,
**en ce que** l'unité de diagnostic (34) est conçue pour reconnaître, dans une surveillance d'état (46), à l'aide d'états provenant des messages d'état (50) et, dans une surveillance d'exécution (48), à l'aide du déroulement d'exécution provenant des messages d'exécution (52), un dysfonctionnement, pertinent en termes de sécurité, du dispositif de sécurité (10), et **en ce que** l'environnement d'exécution (22) comprend un système de messagerie avec deux canaux de messagerie, par lequel ladite au moins une unité fonctionnelle de sécurité (32) transmet des messages d'état (50) et des messages d'exécution (52) en parallèle à l'unité de diagnostic.

2. Dispositif de sécurité (10) selon la revendication 1,
dans lequel l'unité de diagnostic (34) est conçue pour déterminer, en fonction de la situation, si un dysfonctionnement est pertinent en termes de sécurité.

3. Dispositif de sécurité (10) selon la revendication 1 ou 2,
comprenant une unité de coupure (54) conçue pour mettre la machine (12) dans un état de sécurité sur instruction de l'unité de diagnostic (34) en cas de dysfonctionnement pertinent en termes de sécurité ou sur instruction d'une unité fonctionnelle de sécurité (32) en cas de détection d'une situation de danger à l'aide des données de capteur évaluées.

4. Dispositif de sécurité (10) selon l'une des revendications précédentes, dans lequel ladite au moins une unité fonctionnelle de sécurité (32) est conçue pour transmettre régulièrement un message d'état (50) et/ou pour transmettre un message d'exécution (52) sur la base d'un événement pour une exécution respective de sa fonction de sécurité.

5. Dispositif de sécurité (10) selon l'une des revendications précédentes, dans lequel le message d'état (50) et/ou le message d'exécution (52) comprend de préférence une information d'émetteur relative à l'unité fonctionnelle de sécurité (32) émettrice, un horodatage, une séquence et/ou une somme de contrôle.

6. Dispositif de sécurité (10) selon l'une des revendications précédentes, dans lequel ladite au moins une unité fonctionnelle de sécurité (32) est conçue pour un autodiagnostic dans lequel elle vérifie ses propres données, programmes, résultats de traitement et/ou la correspondance avec une heure du système.

7. Dispositif de sécurité (10) selon l'une des revendications précédentes, dans lequel l'unité de diagnostic (34) pour la surveillance d'état (46) est conçue pour appeler des attentes d'état prédéfinies pour les états de ladite au moins une unité fonctionnelle de sécurité (32), en particulier pour modifier les attentes d'état à l'aide d'états, de déroulements de travail et/ou de résultats de travail précédents des unités logiques (28), et pour comparer les attentes d'état à un état global actuel déduit des états des messages d'état (50).

8. Dispositif de sécurité (10) selon l'une des revendications précédentes, dans lequel le message d'état (50) renseigne sur la question de savoir si l'unité fonctionnelle de sécurité (32) transmettant le message d'état (50) existe, si elle a pu s'initialiser, si elle dispose de toutes les ressources nécessaires et/ou si elle est prête à fonctionner.

9. Dispositif de sécurité (10) selon l'une des revendications précédentes, dans lequel l'unité de diagnostic (34) pour la surveillance d'exécution (48) est conçue pour appeler des attentes d'exécution (58) prédéfinies pour le déroulement de l'exécution de ladite au moins une unité fonctionnelle de sécurité (32), en particulier pour modifier les attentes d'exécution (58) à l'aide d'états, de déroulements de travail et/ou de résultats de travail précédents des unités logiques (28), et pour comparer les attentes d'exécution (58) avec le déroulement de l'exécution déduit des messages d'exécution (52).

10. Dispositif de sécurité (10) selon la revendication 9,
dans lequel l'unité de diagnostic (34) est conçue pour prendre en compte, lors d'une évaluation de la comparaison des attentes d'exécution (58) avec le déroulement d'exécution déduit des messages d'exécution (52), au moins l'un des critères suivants : un ordre chronologique d'exécution, l'absence d'une exécution, une exécution supplémentaire, un écart des exécutions par rapport à un schéma de temps, une durée d'exécution trop courte ou une durée d'exécution trop longue.

11. Dispositif de sécurité (10) selon l'une des revendications précédentes, dans lequel le message d'exécution (52) comporte une information d'exécution sur la dernière exécution respective de la fonction de sécurité, en particulier avec l'heure de début et/ou la durée d'exécution.

12. Dispositif de sécurité (10) selon l'une des revendications précédentes, dans lequel l'environnement d'exécution (22) comprend un agrégateur (56) disposé logiquement entre ladite au moins une unité fonctionnelle de sécurité (32) et l'unité de diagnostic (34) et conçu pour recevoir les messages d'exécution (52) et pour définir à partir de ceux-ci le déroulement d'exécution avec un ordre chronologique et/ou une durée d'exécution des fonctions de sécurité de ladite au moins une unité fonctionnelle de sécurité (32), en particulier en temps réel.

13. Dispositif de sécurité (10) selon l'une des revendications précédentes, dans lequel ledit au moins un capteur (14) est conçu comme un capteur optoélectronique, en particulier comme une barrière lumineuse, un détecteur photoélectrique, une grille lumineuse, un scanner laser, un LIDAR FMCW ou une caméra, comme un capteur à ultrasons, un capteur inertiel, un capteur capacitif, un capteur magnétique, un capteur inductif, un capteur UWB ou comme un capteur de grandeur de processus, en particulier comme un capteur de température, de débit, de niveau de remplissage ou de pression, et
le dispositif de sécurité (10) présente en particulier une pluralité de capteurs (14) identiques ou différents.

14. Procédé mis en oeuvre par ordinateur pour surveiller au moins une machine (12), dans lequel au moins un capteur (14) génère des données de capteur relatives à la machine (12), et une unité de traitement (16, 22) pour les données de capteur, reliée au moins indirectement au capteur (14) et à la machine (12), fait fonctionner, en tant qu'environnement d'exécution (22), une pluralité d'unités logiques (28) sur au moins un noeud de calcul (26), et au moins une unité logique (28), en tant qu'unité fonctionnelle de sécurité (32), évalue les données de capteur en fonction de la sécurité, et au moins une unité logique (28), en tant qu'unité de diagnostic (34), surveille ladite au moins une unité fonctionnelle de sécurité (32),
**caractérisé en ce que**
ladite au moins une unité fonctionnelle de sécurité (32) transmet des messages d'état (50) et des messages d'exécution (52) à l'unité de diagnostic (34), sachant que les messages d'état (50) renseignent sur un état de ladite au moins une unité fonctionnelle de sécurité (32) et donc sur sa disponibilité et sur d'éventuelles restrictions ou erreurs, et que les messages d'exécution (52) concernent l'exécution d'une fonction de sécurité ou d'un service que ladite au moins une unité fonctionnelle de sécurité (32) exécute, ce qui définit un déroulement d'exécution des fonctions de sécurité ou des services exécutés,
**en ce que** l'unité de diagnostic (34) reconnaît un dysfonctionnement pertinent en termes de sécurité dans une surveillance d'état (46) à l'aide d'états provenant des messages d'état (50) et dans une surveillance d'exécution (48) à l'aide d'un déroulement d'exécution provenant des messages d'exécution (52), et
**en ce que** l'environnement d'exécution (22) comprend un système de messagerie avec deux canaux de messagerie, par lequel ladite au moins une unité fonctionnelle de sécurité (32) transmet des messages d'état (50) et des messages d'exécution (52) en parallèle à l'unité de diagnostic.
